# EUROPÄISCHE PATENTSCHRIFT

(11) **EP 1 904 760 B1**
(45) Veröffentlichungstag und Bekanntmachung des Hinweises auf die Patenterteilung: **17.06.2015**
(21) Anmeldenummer: 06761723.3
(22) Anmeldetag: 29.06.2006
(51) Int. Cl.: F16F 15/16, F16F 15/134, F16F 15/131

(54) **SCHWINGUNGSDÄMPFUNGSEINRICHTUNG, INSBESONDERE ZWEIMASSENSCHWUNGRAD**
VIBRATION DAMPING DEVICE, PARTICULARLY A DUAL-MASS FLYWHEEL
DISPOSITIF D'AMORTISSEMENT DE VIBRATIONS NOTAMMENT DESTINE A UN VOLANT A DEUX MASSES

(30) Priorität: 14.07.2005 DE 102005032765; 06.04.2006 DE 102006016567; 10.06.2006 DE 102006026974
(43) Veröffentlichungstag der Anmeldung: 02.04.2008
(73) Patentinhaber: Schaeffler Technologies AG & Co. KG, 91074 Herzogenaurach (DE)
(72) Erfinder: MENDE, Hartmut, 77815 Bühl (DE); ZHOU, Bin, 77815 Bühl (DE); KISTNER, Reiner, 77815 Bühl (DE)
(86) Internationale Anmeldenummer: PCT/DE2006/001119
(87) Internationale Veröffentlichungsnummer: WO 2007/006255

(56) Entgegenhaltungen:
- EP-A2- 1 122 461
- EP-B1- 0 685 045
- DE-A1- 3 515 928
- DE-A1- 4 117 582
- DE-A1- 19 633 931
- DE-A1- 19 817 905
- DE-C2- 3 745 156
- DE-U1- 9 213 357
- FR-A1- 2 695 579
- US-A- 4 317 575

## Beschreibung

Die Erfindung betrifft eine Einrichtung zum Dämpfen von Schwingungen, insbesondere zwischen einem Motor und einem Antriebsstrang eines Fahrzeuges, welche ein so genanntes Zweimassenschwungrad bildet. Die Erfindung betrifft insbesondere ein Zweimassenschwungrad, bestehend aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen der Wirkung einer Dämpfungseinrichtung mit Energiespeichern, insbesondere Schraubendruckfedern, zumindest begrenzt zueinander verdrehbar sind, wobei die Energiespeicher in einer ringförmigen, vorzugsweise von den Bauteilen der Primärmasse gebildeten und ein viskoses Medium beinhaltenden, ringartigen Kammer aufgenommen sind und die die Kammer bildenden Bauteile sowie die andere Masse Beaufschlagungsbereiche für die Energiespeicher trägen bzw. aufweisen.

Derartige Einrichtungen zum Dämpfen bzw. Zweischwungräder sind beispielsweise durch die DE 92 13 357 U1, die DE 196 33 931 A1, die DE 35 15 928 A1, die DE 37 45 156 C5, die DE 37 21 712 C2, die DE 41 17 582 A1 und die DE 41 17 579 A1 bekannt geworden.

Solche als Zweimassenschwungräder ausgestaltete Drehmomentübertragungseinrichtungen haben sich bei Kraftfahrzeugen ab der Mittelklasse, insbesondere in Verbindung mit Dieselmotoren, allgemein bewährt, wobei jedoch bei kleineren Fahrzeugen sich solche Einrichtungen trotz ihrer Vorteile aufgrund des verhältnismäßig hohen Preises immer noch nicht auf breiter Basis durchsetzen konnten.

Der vorliegenden Erfindung lag die Aufgabe zugrunde, Drehmomentübertragungseinrichtungen der eingangs genannten Art zu schaffen, die einen sehr kostengünstigen Aufbau aufweisen, weiterhin eine kompakte und somit platzsparende Bauweise besitzen, so dass sie auch bei Fahrzeugen mit sehr begrenztem Einbauraum, wie dies der Fall ist bei kleinen Kraftfahrzeugen mit Queranordnung von Motor und Getriebe, eingesetzt werden können. Weiterhin soll eine erfindungsgemäß ausgestaltete Drehmomentübertragungseinrichtung, wie insbesondere ein Zweimassenschwungrad, in besonders einfacher Weise montierbar sein und eine kostengünstige Herstellung gewährleisten.

Bei einer als Zweimassenschwungrad ausgebildeten Drehmomentübertragungseinrichtung, welche zumindest aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen der Wirkung einer Dämpfungseinrichtung mit Energiespeichern zumindest begrenzt zueinander verdrehbar sind, wobei die Energiespeicher in einer ringförmigen, von den Bauteilen der Primärmasse gebildeten und ein viskoses Medium beinhaltenden ringartigen Kammer aufgenommen sind, werden die der vorliegenden Erfindung zugrunde liegenden Aufgaben unter anderem dadurch gelöst, dass die ringartige Kammer zumindest durch zwei Bauteile begrenzt ist, die radial außerhalb der Energiespeicher sich gegenüber liegende flächige, ringförmige Bereiche besitzen, zwischen denen eine flächige, ringförmige Dichtung eingespannt ist, wobei eines der Bauteile eine Materialstärke aufweist, die 20 bis 50% der Materialdicke des anderen mit der Abtriebswelle eines Motors verbindbaren Bauteils ist, und wobei das Bauteil mit der geringeren Materialstärke einen topfförmigen Bereich bildet, der in seinen ringförmigen Bereich übergeht. Eine derartige Dichtung kann in besonders einfacher und kostengünstiger Weise hergestellt werden und eine einwandfreie Abdichtung der ringartigen Kammer gewährleisten. Durch die Verwendung einer derartigen Dichtung kann die üblicherweise verwendete Schweißverbindung über den gesamten Umfang der Bauteile entfallen. Dadurch kann eine negative Beeinflussung der Eigenschaften des in der Kammer aufgenommenen, viskosen Mediums infolge von auftretenden hohen Temperaturen bei Bildung der Verschweißung vermieden werden. Um eine besonders kostengünstige Herstellung eines solchen Zweimassenschwungrades zu gewährleisten, kann es besonders vorteilhaft sein, wenn zumindest eines der Bauteile, vorzugsweise beide Bauteile, als Blechformteil aus Stahl ausgebildet sind.

Um eine einwandfreie Abdichtung zu gewährleisten, ist es zweckmäßig, wenn die ringförmige Dichtung ein großes Verhältnis zwischen der Breite der Dichtung und der Dicke des diese bildenden Materials besitzt. Dieses Verhältnis kann in vorteilhafter Weise in der Größenordnung zwischen 10 und 100, vorzugsweise zwischen 15 und 60 liegen. Bei einer Dichtungsdicke von 0,5 mm würde somit die Ringbreite in der Größenordnung zwischen 7,5 und 30 mm liegen. Die ringförmige Dichtung kann als separate Dichtung, also als eigenes Bauteil, ausgebildet sein. Zur Bildung der ringförmigen Dichtung kann jedoch auch zumindest auf einem der ringförmigen Bereiche eine pastöse Dichtmasse aufgebracht werden. Derartige Dichtmassen können selbstaushärtend sein oder zum Beispiel mittels Ultraschall oder UV-Bestrahlung aktiviert werden.

Besonders vorteilhaft kann es sein, wenn die Verbindung zwischen den die ringförmigen Bereiche aufweisenden Bauteilen im Erstreckungsbereich der ringförmigen Dichtung erfolgt. Dies ermöglicht eine gedrungene Bauweise, da kein zusätzlicher Platzbedarf für die die Verbindung gewährleistenden Mittel notwendig ist. Die Verbindung kann also im radialen Erstreckungsbereich des zwischen den ringförmigen Flächen aufgenommenen Dichtringes erfolgen. Die Verbindung zwischen den beiden Bauteilen kann in vorteilhafter Weise mittels Nietverbindungen erfolgen, welche, wie bereits erwähnt, vorzugsweise im Erstreckungsbereich der ringförmigen Bereiche bzw. der ringförmigen Dichtung angeordnet sind. Es sind jedoch auch andere Verbindungen möglich, so könnte beispielsweise die Verbindung auch mittels Punktschweißen erfolgen. Die einzelnen Schweißpunkte und/oder Schweißwarzen können dabei ebenfalls im radialen Erstreckungsbereich der ringförmigen Dichtung vorgesehen werden.

Die Verbindungen bzw. zumindest einzelne Verbindungen können jedoch auch radial innerhalb und/oder radial außerhalb der ringförmigen Dichtung vorgesehen werden.

Eine besonders kostengünstige Verbindung zwischen den die ringförmigen Bereiche aufweisenden Bauteilen kann mittels Nietelementen erfolgen, die einstückig mit zumindest einem der die ringförmigen Bereiche bildenden Bauteile ausgebildet sind. Derartige Nietelemente können als so genannte Nietwarzen ausgebildet sein, die einstückig ausgebildet sind mit einem Blechformteil, das zur Bildung der ringartigen Kammer dient. Derartige Nietwarzen werden durch Ausnehmungen eines anderen Blechformteils axial hindurchgesteckt und die axial überstehenden Bereiche zu einem Nietkopf umgeformt. Die innerhalb der ringförmigen Bereiche bzw. der ringförmigen Dichtung vorgesehenen Verbindungen, wie insbesondere Nietverbindungen, können in Bezug auf die Rotationsachse des entsprechenden Zweimassenschwungrades auf unterschiedlichen Radien angeordnet sein. Die Verbindungen können dabei in vorteilhafter Weise zumindest in zwei Gruppen unterteilt sein, die auf unterschiedlichen Radien angeordnet sind. Dabei können die Verbindungen der einen Gruppe gegenüber den Verbindungen der anderen Gruppe in Umfangsrichtung versetzt zueinander angeordnet sein. Bei einer derart versetzten Anordnung der Verbindungsstellen können diese in Umfangsrichtung betrachtet zickzackförmig angeordnet werden. Die Verbindungen und die Dichtung können derart angeordnet und ausgebildet sein, dass außer den Verbindungen selbst kein metallischer Kontakt zwischen den zu verbindenden Bauteilen besteht.

Besonders zweckmäßig kann es sein, wenn das die ringförmige Dichtung bildende Material zumindest in axialer Richtung elastische Eigenschaften aufweist und in einem elastisch verspannten Zustand zwischen den ringförmigen Bereichen der die Kammer bildenden Bauteile verbaut ist. Eine kostengünstige Herstellung der ringförmigen Dichtung kann durch den Einsatz eines auf Zellulosebasis bestehenden Materials erfolgen. Der auf Zellulosebasis hergestellte Dichtungsring kann dabei eine Latexbindung und/oder Latexbeschichtung aufweisen.

Besonders zweckmäßig kann es sein, wenn der Dichtungsring axiale Ausschnitte für den Durchgang der die beiden Blechformteile verbindenden Befestigungsmittel, wie insbesondere Nietelemente, aufweist. Im Bereich derartiger Durchgänge bzw. Ausschnitte können auch die vorerwähnten Punktschweißungen erfolgen, wobei vor Bildung dieser Schweißpunktstellen die ringförmige Dichtung in einen zumindest axial elastisch verspannten Zustand gebracht wird. Dadurch wird eine einwandfreie Abdichtung der Kammer zumindest nach radial außen hin gewährleistet.

Bei einem Zweimassenschwungrad, bestehend aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen der Wirkung einer Dämpfungseinrichtung mit Schraubendruckfedern zumindest begrenzt zueinander verdrehbar sind, wobei die Schraubendruckfedern in einer ringförmigen, von Bauteilen einer der Massen gebildeten und ein viskoses Medium beinhaltenden, ringartigen Kammer aufgenommen sind, und beide Massen Beaufschlagungsbereiche für die Schraubendruckfedern tragen, deren Windungen sich zumindest unter Fliehkrafteinwirkung an einer die ringartige Kammer begrenzenden, sich über die Längserstreckung der Schraubendruckfedern erstreckenden Wandung abstützen, kann es vorteilhaft sein, wenn die Windungen zumindest im Kontaktbereich mit der sie zumindest radial abstützenden Wandung eine Anformung zur Bildung einer flächigen Abstützung aufweisen. Durch eine derartige Vergrößerung des Kontaktbereiches zwischen den Windungen und der diese abstützenden Wandung kann zumindest bei bestimmten Betriebszuständen der beim Entlanggleiten der Windungen an der entsprechenden Wandung entstehende Verdrehwiderstand reduziert werden. Dies ist wahrscheinlich darauf zurückzuführen, dass die Bildung eines Schmierfilmes durch die Anformungen an den Windungen begünstigt wird. Durch die Schaffung eines flächigen Kontaktes zwischen den Federwindungen und der Wandung wird ein punktueller Kontakt vermieden und somit die entstehende Flächenpressung wesentlich reduziert. Diese Reduzierung der Flächenpressung im Bereich der Kontakte zwischen Windungen und Wandung begünstigt ebenfalls den Aufbau eines Schmierstofffilmes.

Die an den Windungen vorhandenen Anformungen können in einfacher Weise durch Anprägen hergestellt werden. Derartige Anprägungen können dabei - in Längsrichtung einer Schraubendruckfeder betrachtet - einen Krümmungsradius aufweisen, der zumindest annähernd dem Krümmungsradius der die Windungen abstützenden Wandung entspricht. Die die Windungen radial abstützende Wandung kann dabei einen Querschnittsverlauf mit einem Radius besitzen, der größer ist als der Außenradius der Windungen. Die Anformungen an den Federwindungen können in vorteilhafter Weise in ähnlicher Weise hergestellt werden, wie dies in der DE 44 06 826 und der DE 43 06 895 C1 beschrieben ist. Die entsprechenden Federwindungen können dabei auch in ähnlicher Weise, wie dies durch diese Veröffentlichungen bekannt geworden ist, seitliche Anformungen besitzen, welche eine einwandfreie Blockbeanspruchung der entsprechenden Schraubendruckfedern ermöglichen.

Obwohl es vorteilhaft sein kann, wenn die vorerwähnten Anformungen an den Windungen lediglich im Kontaktbereich zwischen diesen Windungen und/oder der sie radial abstützenden Wandung vorgesehen werden, kann es für die meisten Anwendungsfälle zweckmäßig sein, wenn sich derartige Anformungen über die gesamte Länge des eine Schraubendruckfeder bildenden Federdrahtes erstrecken. Diese Anformungen können zumindest annähernd an den umfangsmäßigen Krümmungsradius der durch die Wandung gebildeten Abstützfläche angepasst sein. Der Querschnittsverlauf der Abstützfläche kann einen radial äußeren Bereich besitzen, der einen Krümmungsradius besitzt, der gleich oder größer ist als der äußere Windungsradius einer Schraubendruckfeder. Die Abstützfläche für die Federwindungen kann in einfacher Weise durch eine im äußeren Bereich der ringartigen Kammer angeordnete, schalenförmige Einlage gebildet sein, die sich zumindest über die Länge einer Schraubendruckfeder erstreckt. Eine derartige Einlage kann jedoch auch einen abgewinkelten bzw. dachförmigen Querschnitt besitzen, an dem die Windungen an zwei axial beabstandeten Abstützpunkten oder Abstützbereichen anliegen.

Bei einem Zweimassenschwungrad, bestehend aus einer mit der Abtriebswelle eines Motors verbindbaren Primärmasse und einer mit dem Eingangsteil eines Getriebes verbindbaren Sekundärmasse, die mittels mindestens einer Lagerung konzentrisch und axial zueinander positioniert sind und entgegen der Wirkung einer Dämpfungseinrichtung mit Schraubendruckfedern zumindest begrenzt zueinander verdrehbar sind, wobei die Schraubendruckfedern in einer ringförmigen, von Bauteilen einer der Massen gebildeten und ein viskoses Medium beinhaltenden, ringartigen Kammer aufgenommen sind, wobei die die Kammer bildenden Bauteile und die andere Masse Beaufschlagungsbereiche für die Schraubendruckfedern aufweisen und die die Kammer bildenden Bauteile zumindest ein Blechformteil umfassen, das zur Bildung von Beaufschlagungsbereichen axial in die ringartige Kammer hineinragende Anprägungen besitzt, kann es besonders zweckmäßig sein, wenn im Bereich des die Anprägungen bildenden Materials eine diese Anprägungen bzw. die durch diese gebildeten Beaufschlagungsbereiche versteifende Formgebung vorgesehen ist. Eine derartige versteifende Formgebung kann beispielsweise durch eine im Bereich des die Anprägungen bildenden Materials eingebrachte Sicke gebildet sein. Die versteifende Formgebung kann jedoch auch durch zumindest eine in radialer Richtung und/oder in Umfangsrichtung und/oder in schräger Richtung eingebrachte sickenförmige Anformung gebildet sein. Die versteifende Formgebung kann eine axiale, dachförmige Anformung des die Anprägungen bildenden Materials aufweisen. Der Kamm einer derartigen dachförmigen Anformung kann in radialer Richtung verlaufen.

Gemäß einer Weiterbildung der Erfindung kann es besonders zweckmäßig sein, wenn die Sekundärmasse als Blechformteil aus Stahl ausgebildet ist und eine Reibfläche für zumindest einen Reibbelag einer Kupplungsscheibe aufweist, wobei radial außerhalb der Reibfläche über den Umfang winkelmäßig verteilte Befestigungsbereiche vorgesehen sind, welche insbesondere Abstützflächen für ein mit der Sekundärschwungmasse verbindbares Kupplungsgehäuse bilden, die gegenüber der Reibfläche axial versetzt sind, wobei die Befestigungsbereiche eine erste und eine zweite Art von Bereichen bilden, die in Umfangsrichtung versetzt angeordnete und zumindest paarweise einander zugeordnete Endbereiche bilden, wobei die beiden Arten von Bereichen in Umfangsrichtung länglich ausgebildet und radial innen durch einen Trennschnitt gegenüber den angrenzenden Blechbereichen getrennt sind und sich der Endbereich eines ersten Bereiches mit dem benachbarten Endbereich eines zweiten Bereiches - in Umfangsrichtung betrachtet - überschneiden. Die die zwei Arten von Bereichen bildenden Trennschnitte können sich in vorteilhafter Weise umfangsmäßig überschneiden. Die Endbereiche der beiden Arten von Bereichen können dabei derart ausgebildet sein, dass sie zumindest partiell radial übereinander liegen, wobei der eine Bereich Endbereiche besitzen kann, die diesen mit radial weiter innen liegenden Blechabschnitten, welche die Reibfläche bilden, verbinden und der zweite Bereich kann einen Endabschnitt besitzen, der in den ersten Bereich übergeht.

In vorteilhafter Weise kann zumindest ein eine Reibfläche für wenigstens einen Reibbelag einer Kupplungsscheibe aufweisendes Bauteil vorhanden sein, welches Bestandteil der Sekundärmasse ist und als Blechformteil aus Stahl ausgebildet ist, welches radial außerhalb der Reibfläche über den Umfang verteilte Befestigungsbereiche besitzt, die gegenüber der Reibfläche axial versetzt sind, wobei diese Befestigungsbereiche eine erste Art und eine zweite Art von Bereichen bilden, die in Umfangsrichtung angeordnet und zumindest paarweise einander zugeordnet sind, wobei diese Bereiche durch wenigstens einen Trennschnitt von den radial innerhalb derselben vorhandenen Blechbereichen, welche auch die Reibfläche bilden, getrennt sind, wobei weiterhin - in Umfangsrichtung betrachtet - zwischen zwei in Umfangsrichtung aufeinander folgenden Bereichen ein diese koppelnder Verbindungsbereich vorhanden ist, der einen axialen Versatz gegenüber der Reibfläche aufweist, der geringer ist als die Materialdicke des Bleches und wobei dieser radiale Versatz durch nur teilweises Durchstellen des Blechmaterials gebildet ist. Die Bereiche, in denen lediglich eine Durchstellung des Blechmaterials vorhanden ist, können dabei einen geringeren axialen Versatz gegenüber der Reibfläche aufweisen als die sich daran in Umfangsrichtung anschließenden Bereiche eines Befestigungsbereiches, die mittels eines Trennschnittes gebildet wurden.

Gemäß einem weiteren erfinderischen Gedanken kann ganz allgemein die Sekundärmasse als Blechformteil ausgebildet sein und unmittelbar die Reibfläche für wenigstens einen Reibbelag einer Kupplungsscheibe bilden, wobei radial außerhalb der Reibfläche axial gegenüber dieser versetzte Befestigungsbereiche für das Gehäuse einer Reibungskupplung und radial innerhalb der Reibfläche axial gegenüber dieser versetzte Verbindungsbereiche für zumindest ein scheibenförmiges Bauteil vorhanden sind, wobei die Befestigungsbereiche und die Verbindungsbereiche in Bezug auf die Reibfläche axial in entgegengesetzte Richtungen versetzt sind. Es kann weiterhin vorteilhaft sein, wenn das Blechformteil radial innen einen einstückig angeformten, ringförmigen Ansatz trägt, der eine Öffnung begrenzt, wobei die Mantelfläche der Öffnung zur Bildung einer Gleitlagerung oder zur Aufnahme einer Gleitlagerung dienen kann.

Weitere vorteilhafte Funktionsmerkmale sowie zweckmäßige bauliche und wirkungsmäßige Weiterbildungen der Erfindung werden in Zusammenhang mit der folgenden Figurenbeschreibung näher erläutert.

Dabei zeigen:
- Figur 1: einen Schnitt durch eine erfindungsgemäß ausgestaltete Schwingungsdämpfungseinrichtung,
- Figur 2: eine perspektivische Darstellung einer Einzelheit der Figur 1,
- Figur 3: eine mögliche Ausgestaltung eines Dichtringes zur Verwendung bei einer Drehschwingungsdämpfungseinrichtung gemäß Figur 1,
- Figur 4: eine perspektivische Darstellung eines weiteren Details der Drehschwingungsdämpfungseinrichtung gemäß Figur 1,
- Figur 5: eine weitere perspektivische Darstellung eines weiteren Details der Drehschwingungsdämpfungseinrichtung gemäß Figur 1,
- Figur 6: eine alternative Ausgestaltungsmöglichkeit einer radialen Abstützschale für die Federn, die in Zusammenhang mit dem Drehschwingungsdämpfer gemäß Figur 1 Verwendung finden kann,
- Figuren 7 und 8: zwei besonders vorteilhafte Drahtquerschnitte für Schraubendruckfedern,
- Figur 9: eine vorteilhafte Ausgestaltungsmöglichkeit einer Sekundärmasse,
- Figuren 10 und 11: weitere Ausgestaltungsmöglichkeiten einer Sekundärschwungmasse,
- Figur 12: eine vorteilhafte Ausgestaltung der Beaufschlagungsbereiche eines Blechformteils für Schraubendruckfedern,
- Figur 13: eine andere vorteilhafte Ausgestaltungsmöglichkeit von Beaufschlagungsbereichen für Schraubendruckfedern,
- Figuren 14 und 15: Querschnitte durch ein Blechformteil zur Bildung einer ringförmigen Kammer, wo bei Figur 14 einen Schnitt durch einen Beaufschlagungsbereich für Schraubendruckfedern zeigt,
- Figur 16: eine weitere vorteilhafte Ausgestaltung eines Zweimassenschwungrades.

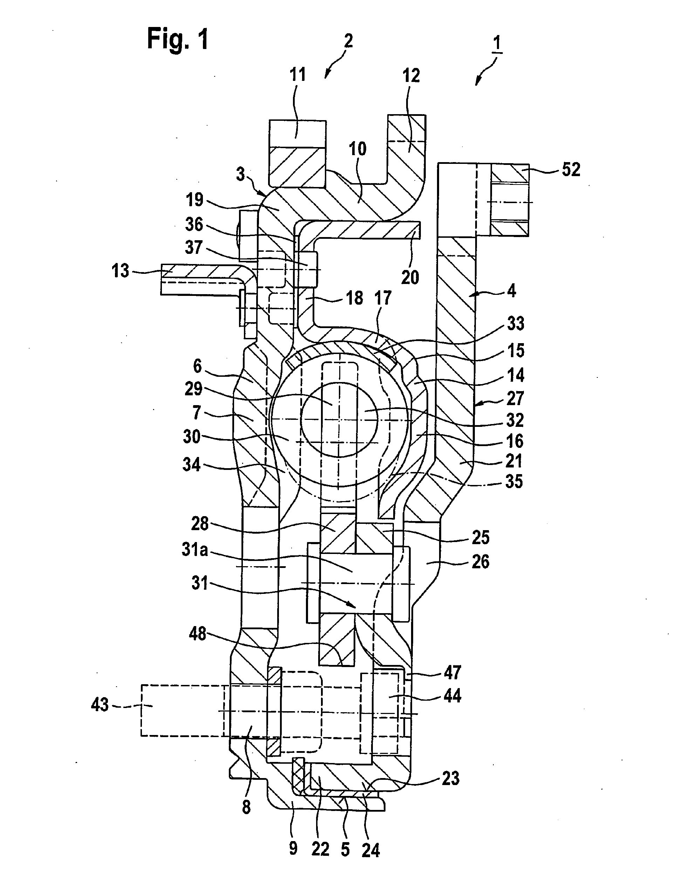

Die in Figur 1 dargestellte Drehschwingungsdämpfungseinrichtung 1 bildet ein so genanntes Zweimassenschwungrad 2, das eine Primärmasse 3 und eine Sekundärmasse 4 umfasst, die über eine Lagerung 5 zueinander zentriert und rotierbar gelagert sind. Die Lagerung 5 ist bei dem dargestellten Ausführungsbeispiel durch ein so genanntes Gleitlager gebildet. Bezüglich der Funktion und möglichen Ausgestaltung derartiger Gleitlager wird auf die DE 198 34 728 A1 verwiesen, so dass im Rahmen der vorliegenden Anmeldung diesbezüglich nicht näher eingegangen werden muss.

Die Primärmasse 3 und die Sekundärmasse 4 sind durch Blechformteile gebildet, die vorzugsweise als Stanz- und/oder Prägeteile ausgeführt sind. Derart hergestellte Teile können praktisch werkzeugfallend hergestellt werden, so dass eine nachträgliche spanende Bearbeitung entfallen kann. Lediglich evtl. notwendige Verschraubungsgewinde müssen gegebenenfalls nachträglich eingebracht werden. Dieser nachträgliche Arbeitsgang kann jedoch durch Verwendung von gewindeschneidenden Schrauben bzw. gewindefurchenden Schrauben entfallen. Bei Verwendung von gewindefurchenden Schrauben kann das Gewinde anstatt durch einen Schneidvorgang durch Materialverdrängung hergestellt werden. Dadurch kann eine erhöhte Festigkeit der Gewindegänge erzielt werden.

Die Primärmasse 3 besteht aus einem mit der Abtriebswelle eines Motors verbindbaren Blechformteil 6, das einen radial verlaufenden Bereich 7 besitzt, der radial innen Verschraubungsöffnungen 8 aufweist. Das als Blechformteil ausgebildete Bauteil 6 trägt innen einen axialen Ansatz 9, der hülsenartig bzw. rohrartig ausgebildet und hier einstückig mit dem Bauteil 6 ist. Radial außen geht das Bauteil 6 in einen ringförmigen axialen Ansatz 10 über, der hier ebenfalls einstückig mit dem Bauteil 6 ausgeführt ist. Auf diesem axialen Ansatz 10 ist ein Anlasserzahnkranz 11 aufgenommen. Der axiale Ansatz 10 wiederum geht hier in einen radial nach außen weisenden, ringförmigen Bereich 12 über. Der ringförmige Bereich 12 kann gegebenenfalls am Umfang eingebrachte Markierungen, zum Beispiel Vertiefungen bzw. Zähne, aufweisen, die für das Motormanagement dienen. Bei dem dargestellten Ausführungsbeispiel ist jedoch hierfür auf der dem Motor zugewandten Seite des Bauteils 6 ein spezielles Geberblech 13 vorgesehen.

Die Primärmasse 3 umfasst weiterhin ein Blechformteil 14, das eine wesentlich geringere Materialstärke aufweist als das Blechformteil 6. Die Materialdicke des Blechformteiles 14 kann in der Größenordnung von 20 bis 50 %, vorzugsweise 20 bis 30 %, der Materialdicke des Blechformteiles 6 betragen. In vorteilhafter Weise kann zumindest das dünnere Blechformteil 14 aus gehärtetem Material bestehen, wodurch ein wesentlich höherer Widerstand gegen Verschleiß bzw. Durcharbeitung gewährleistet ist.

Das Blechformteil 14 bildet einen topfförmigen Bereich 15, der radiale Abschnitte 16 und axiale Abschnitte 17 umfasst. Die axialen Abschnitte 17 gehen in einen ringförmigen Bereich 18 über, der radial nach außen verläuft und einem ringförmigen Abschnitt 19 der radialen Wandung 7 benachbart ist. Der ringförmige Bereich 18 geht hier in einen axial verlaufenden Bereich 20 über, der innen den ringförmigen Absatz 10 tangiert. Zwischen dem axialen Bereich 20 und dem ringförmigen Ansatz 10 kann ein radialer Abstand vorhanden sein. Es kann jedoch auch zweckmäßig sein, über diese Bereiche die Bauteile 6 und 14 zu zentrieren bzw. vorzuzentrieren.

Der ringförmige Absatz 10 und der axiale Bereich 20 können jedoch auch über eine Pressverbindung miteinander verbunden sein. Hierfür kann beispielsweise das Bauteil 14 axial in das Bauteil 6 eingepresst werden. Eine derartige Verbindung kann jedoch auch mittels einer Schrumpfverbindung, die gegebenenfalls mit einer Pressverbindung kombiniert werden kann, erfolgen. Hierfür kann vor dem Zusammenbau das Bauteil 6 erwärmt und/oder das Bauteil 14 abgekühlt werden. Bei der Herstellung einer derartigen Verbindung kann, falls notwendig, auch ein Dichtmittel bzw. eine Dichtmasse zwischen den Bereichen 20 und 10 und/oder zwischen den Bereichen 18 und 19 vorgesehen werden. Eine derartige Dichtmasse kann flüssig oder pastös sein und beispielsweise silikonhaltig sein. Die Dichtmasse kann dabei gleichzeitig Klebeigenschaften besitzen. Auch ist es zweckmäßig, wenn die Dichtmasse eine auftragbare Beschichtungsmasse bildet. Die Dichtungsmassen können selbstaushärtend sein oder aber durch Bestrahlung aktiviert werden, zum Beispiel mittels UV-Strahlung. Die Dichtungsmassen können auch so genannte Mikrokapseln beinhalten, die beim Zusammenfügen der entsprechenden Bauteile oder durch Bestrahlung (UV- und/oder Hitzebestrahlung) zerstört werden und den Aktivator und/oder Katalysator freigeben.

Es können jedoch auch, wie im Folgenden noch näher beschrieben, Dichtungen verwendet werden, die zwischen entsprechend angepasste Flächen bzw. Bereiche eingespannt werden.

Die Sekundärmasse 4 ist hier ebenfalls durch ein Blechformteil 21 gebildet, das im Wesentlichen radial verläuft und radial innen einen hier einstückig angeformten, axialen Ansatz 22 aufweist. Der axiale Ansatz 22 ist axial in Richtung des radialen Bereiches 7 gerichtet und bildet eine zylindrische Aufnahme 23, in die die Gleitlagerbuchse 24 eingepresst ist.

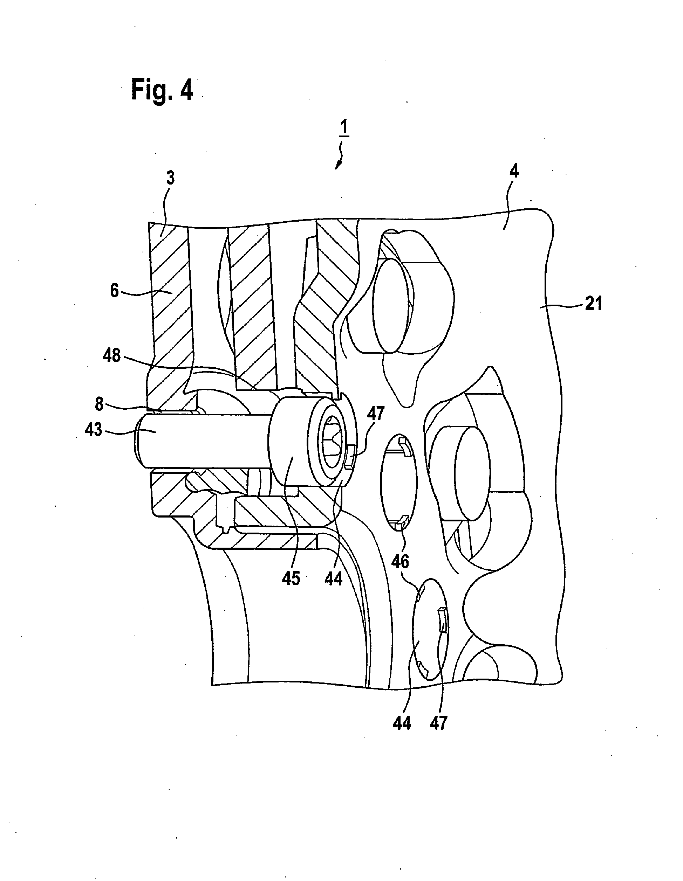

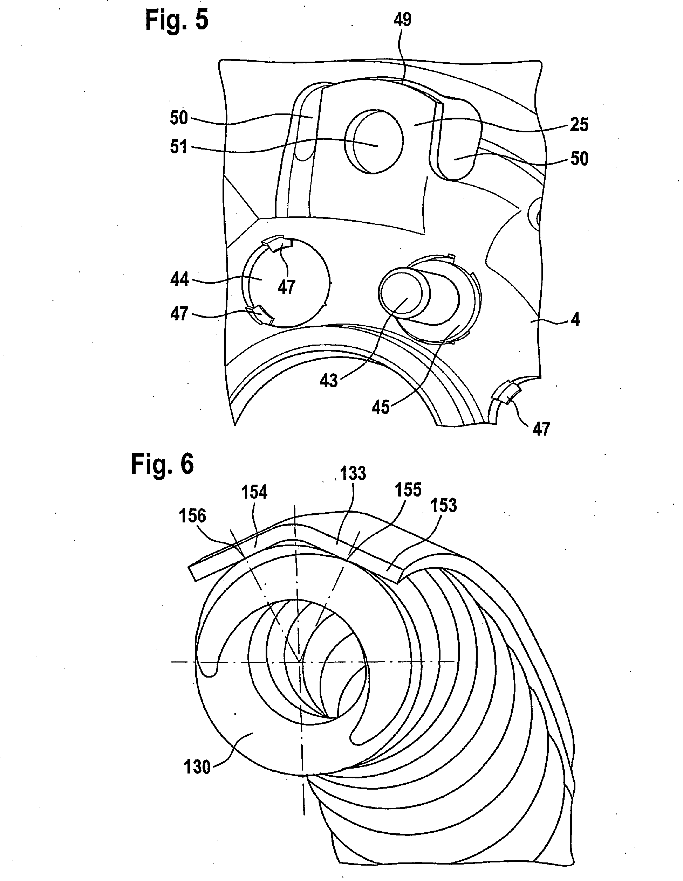

Das Blechformteil 21 besitzt einstückig herausgeformte laschenförmige Befestigungsbereiche 25, die in Richtung des radialen Bereiches 7 des Blechformteiles 6 gegenüber den benachbarten Bereichen des Blechformteiles 21 axial versetzt sind. Es sind mehrere über den Umfang verteilte, derartige Befestigungsbereiche 25 vorgesehen, die vorzugsweise winkelmäßig gleichmäßig verteilt sind. In vorteilhafter Weise können zumindest zwei derartige Befestigungsbereiche vorhanden sein, wobei zur Übertragung von hohen Drehmomenten zum Beispiel auch drei und mehr derartige Befestigungsbereiche 25 Verwendung finden können. Bei dem dargestellten Ausführungsbeispiel sind die Befestigungsbereiche 25 durch partielles Heraustrennen aus dem das Bauteil 21 bildenden Blech gebildet. Die als Laschen 25 ausgebildeten Befestigungsbereiche können dabei durch zumindest partielles einfaches Durchtrennen und/oder durch zumindest partielles Umschneiden aus dem Blechmaterial herausgeformt werden. Dies wird in Zusammenhang mit den Figuren 4 und 5 noch näher beschrieben.

Die dargestellte Variante hat den Vorteil, dass durch das Heraustrennen bzw. Umschneiden der Befestigungslaschen 25 axiale Durchlässe in der Sekundärschwungmasse 4 gebildet werden, die eine Luftzirkulation zur Kühlung der Drehmomentübertragungseinrichtung, insbesondere der Sekundärmasse 4, ermöglichen. Die axialen Durchlässe bzw. Kühlöffnungen 26 und die Befestigungslaschen 25 sind radial innerhalb der durch die Sekundärmasse 4 gebildeten Reibfläche 27 für den Reibbelag einer Kupplungsscheibe vorgesehen.

In Abänderung der dargestellten Ausführungsform der Sekundärmasse 4 können die axial in Richtung des radialen Bereiches 7 hervorstehenden Befestigungsbereiche 25 auch durch Anprägungen gebildet sein. Derartige Anprägungen können, axial in Richtung von der Reibfläche 27 her betrachtet, taschenförmige Vertiefungen bilden. Zur Erzeugung einer Kühlluftzirkulation können bei einer derartigen Ausführungsform in Umfangsrichtung zwischen den Anprägungen entsprechend ausgebildete axiale und/oder radiale Öffnungen vorgesehen werden. Die den Öffnungen benachbarten Bereiche können dabei eine Formgebung aufweisen, welche die gewünschte Luftzirkulation begünstigt, also beispielsweise belüftungsflügelartig bzw. schaufelartig wirken. Hierfür kann das Blechmaterial entsprechend angeprägt werden und/oder entsprechende Blechbereiche verdrillt und/oder axial aufgestellt werden.

Wie aus Figur 1 zu entnehmen ist, dienen die Befestigungsbereiche 25 zur drehfesten Koppelung und Positionierung eines scheibenartigen bzw. flanschartigen Bauteils 28, welches radiale Ausleger 29 besitzt, die zur Beaufschlagung von Federn 30 dienen, die sich einer Relativverdrehung zwischen den beiden Schwungmassen 3 und 4 widersetzen. Das ringförmige Bauteil 28 ist bei dem dargestellten Ausführungsbeispiel mit den Befestigungsbereichen 25 über Nietverbindungen 31 verbunden. Bei dem dargestellten Ausführungsbeispiel sind zur Bildung der Nietverbindungen 31 getrennte Nietelemente 31a vorgesehen. Es können jedoch auch Nietelemente zum Einsatz kommen, die einstückig aus den Befestigungsbereichen 25 und/oder dem flansch- bzw. scheibenförmigen Bauteil 28 axial herausgeformt sind. Um eine ausreichende Länge dieser Nietelemente zu gewährleisten, kann es vorteilhaft sein, wenn diese axial hohl ausgebildet sind. Diese Nietelemente können jedoch auch voll ausgebildet werden, wobei gegebenenfalls zur Bildung derartiger Nietelemente eine partielle, flächige Dickenverringerung des Ausgangsblechmaterials vorteilhaft sein kann.

Die Energiespeicher bildenden Federn 30 sind in einem ringförmigen Raum 32 aufgenommen, der durch die beiden Bauteile 6 und 14 begrenzt wird. Der ringförmige Raum 32 kann in vorteilhafter Weise zumindest teilweise mit einem Schmiermittel bzw. viskosen Medium, wie zum Beispiel Fett, befüllt sein.

Bei dem dargestellten Ausführungsbeispiel ist im radial äußeren Bereich der ringförmigen Kammer 32 ein Verschleißschutz 33 vorgesehen, der zwischen den durch Schraubenfedern 30 gebildeten Energiespeichern und den axialen Abschnitten 17 vorgesehen ist. Der Verschleißschutz 33 ist hier durch schalenartige Einlagen gebildet, die sich in Umfangsrichtung zumindest über die Länge der Schraubenfedern 30 erstrecken, Bei dem dargestellten Ausführungsbeispiel ist die Verschleißschutzschale 33, im Querschnitt betrachtet, zumindest annähernd dem Außendurchmesser der Federwindungen angepasst. Der Querschnitt einer derartigen Verschleißschutzschale 33 kann jedoch auch eine andere Form aufweisen, zum Beispiel dachförmig oder mehreckig. Entsprechend der Formgebung des Querschnittes bzw. des Querschnittradius können die einzelnen Windungen nur einen Berührungspunkt bzw. Berührungsbereich oder und mehr derartiger Berührungsbereiche aufweisen. In Figur 6 ist ein verwendbarer Querschnitt für einen Verschleißschutz dargestellt. Es ist ersichtlich, dass bei einer derartigen Ausgestaltung zwei Berührungspunkte bzw. Berührungsbereiche 153, 154 für die einzelnen Federwindungen vorhanden sind.

Zusätzlich oder alternativ zu den Verschleißschutzschalen 33 können Abstützelemente vorgesehen werden, die als Roll- und/oder Gleitschuhe ausgebildet sein können. Bezüglich der möglichen Ausgestaltung derartiger Gleitschuhe bzw. Rollschuhe und deren Funktion wird auf die DE 102 41 879 A1 und die DE 10 2004 006 879 A1 verwiesen. Die durch Schraubenfedern 30 gebildeten einzelnen Energiespeicher können lediglich aus einer einzigen Schraubenfeder, die einen gekrümmten Verlauf im unverspannten Zustand besitzt, gebildet sein. Ein derartiger Energiespeicher kann jedoch auch aus einer Mehrzahl von hintereinander angeordneten, kürzeren Schraubenfedern bestehen. Diese Schraubenfedern können entweder unmittelbar aneinander abgestützt sein oder aber sich über zwischengelegte, vorzugsweise keilförmige Zwischenstücke aneinander abstützen. Derartige Kraftspeicher sind beispielsweise durch die DE 197 49 678 A1 und die DE 198 10 550 C2 bekannt geworden.

Bezüglich der Ausgestaltung und Anordnung bzw. Führung derartiger Schraubenfedern bzw. Energiespeicher wird weiterhin auf die DE 199 09 044 A1, DE 196 03 248 A1, DE 196 48 342 A1, DE 102 09 838 A1 und DE 102 41 879 A1 verwiesen.

Bei auf Block beanspruchten Schraubenfedern können diese in vorteilhafter Weise Windungen aufweisen, die zumindest in den auf Block gehenden Bereichen eine Abflachung aufweisen. Derartige Schraubenfedern sowie Verfahren zur Herstellung derartiger Schraubenfedern sind durch die DE 44 06 826 A1 und die DE 43 06 895 C1 vorgeschlagen worden. Auch können zumindest einzelne der Schraubenfedern 30 eine Ausgestaltung gemäß der WO 99/49234 aufweisen.

Um die Lebensdauer der verwendeten Schraubenfedern zu erhöhen bzw. einen Bruch der Endwindungen dieser Federn zu verhindern, kann es auch zweckmäßig sein, wenn diese Endwindungen gemäß der DE 42 29 416 A1 ausgebildet werden.

Obwohl üblicherweise zur Herstellung von Schraubenfedern 30 Federdraht mit im Wesentlichen rundem Drahtquerschnitt verwendet wird, kann es für manche Anwendungsfälle auch vorteilhaft sein, wenn andere Drahtquerschnitte zum Einsatz kommen, zum Beispiel mit einem ovalartigen bzw. ellipsenförmigen Querschnitt oder einem polygonalen bzw. mehrkantigen Querschnitt, zum Beispiel im Wesentlichen rechteckigen Querschnitt. Durch den Einsatz von Federdrähten mit derartigen Querschnitten können die in den Federwindungen auftretenden Spannungsverhältnisse bei Bedarf noch zusätzlich optimiert werden und/oder die zwischen den Federwindungen und den diese unter Fliehkrafteinwirkung abstützenden Bereichen vorhandenen Kontaktflächen bzw. Abstützflächen vergrößert werden. Durch die Vergrößerung der Abstützflächen kann der zumindest an den Windungen auftretende Verschleiß reduziert werden. Weiterhin kann durch das Vorsehen von Kontaktflächen der Aufbau eines Schmierfilms begünstigt werden. Es soll also durch derartige Maßnahmen eine Linienberührung bzw. Punktberührung der Windungen an den radialen Abstützflächen vermieden werden.

Obwohl es zweckmäßig sein kann, die vorerwähnten Abflachungen bzw. Anformungen an den Windungen über die gesamte Länge des eine Schraubenfeder bildenden Federdrahtes vorzusehen, kann es auch vorteilhaft sein, derartige Abflachungen bzw. Anformungen lediglich in den umfangsmäßigen Windungsbereichen vorzusehen, die mit einer anderen Windung bzw. einem anderen Bauteil in Kontakt kommen. Die partiellen bzw. stellenweise vorgesehenen Anformungen bzw. Abflachungen können in ähnlicher Weise, wie dies in der DE 44 06 826 A1 und der DE 43 06 895 C1 beschrieben ist, realisiert werden, wobei hierfür entsprechende Formwerkzeuge bzw. Formwalzen notwendig sind.

Verwendbare Drahtquerschnitte von Schraubenfedern mit unrundem Querschnitt sind beispielsweise durch das japanische Gebrauchsmuster 2-38528, die FR 2 678 035, das japanische Gebrauchsmuster 60-175922 oder die JP 60-241535 A1 bekannt geworden.

Zweckmäßig kann es auch sein, die Abstützschalen 33 derart auszugestalten, dass sie aufgrund der durch die Schraubenfedern 30 ausgeübten Fliehkraft zumindest eine Querschnittsverformung erfahren. Durch eine derartige elastische Ausbildung der Verschleißschalen 33 kann erzielt werden, dass sich die Kontaktpunkte bzw. Kontaktbereiche zwischen den Federwindungen und den Verschleißschalen 33 in Abhängigkeit der Drehzahl verändern. Durch entsprechende Ausgestaltung der Schalen 33 kann erzielt werden, dass bei höheren Drehzahlen die effektive Kontaktfläche zwischen den Federwindungen und den Schalen 33 größer ist als bei niedrigen Drehzahlen.

Die Schraubenfedern 30 können auch eine von der Ringform abweichende Windungsform aufweisen. So können beispielsweise die Windungen dreieckartig oder ovalförmig oder ellipsenförmig ausgebildet sein. Die Hauptachse der ovalartig bzw. ellipsenförmig ausgebildeten Windungen kann dabei in radialer oder axialer Richtung ausgerichtet sein, wobei es für manche Anwendungsfälle auch zweckmäßig sein kann, wenn diese Hauptachse eine zwischen den beiden vorerwähnten Lagen liegende, schräge Lage aufweist.

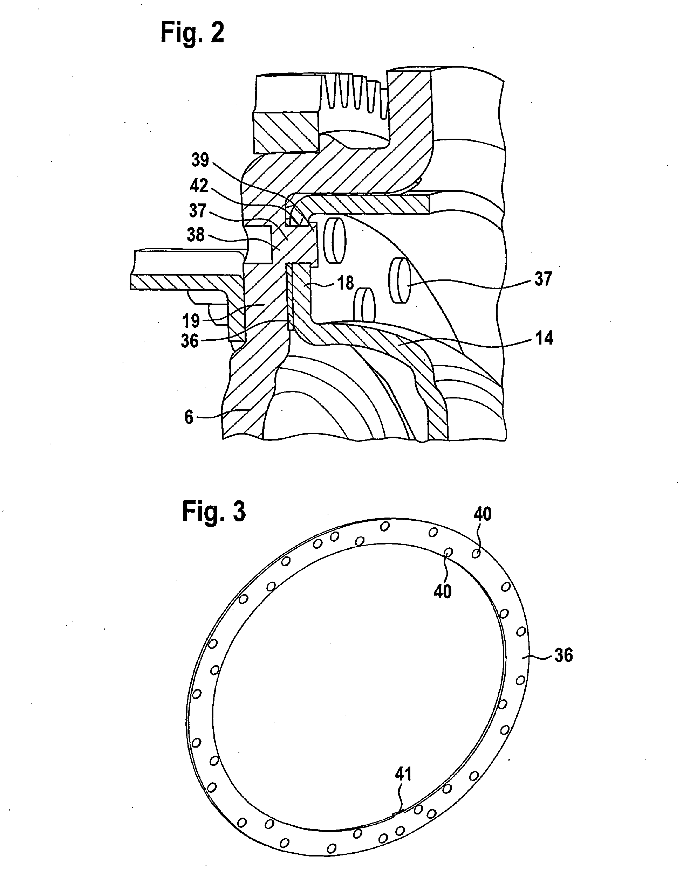

Zur Beaufschlagung der Schraubenfedern 30 besitzen die Blechbauteile 6 und 14 axiale Anformungen 34, 35, an denen sich die Endwindungen der Federn 30 abstützen. Diese Anformungen können beispielsweise durch Anprägungen gebildet werden. Bezüglich der Ausgestaltung derartiger Anformungen wird auf den bereits erwähnten Stand der Technik verwiesen. Bei dem dargestellten Ausführungsbeispiel erfolgt die radiale Abdichtung der Kammer 32 mittels einer ringförmigen, flächigen Dichtung 36, die auch in der perspektivischen Detaildarstellung gemäß Figur 2 erkennbar und in Figur 3 als Ganzes dargestellt ist.

Wie insbesondere aus Figur 2 ersichtlich ist, ist die Ringdichtung 36 axial zwischen dem ringförmigen Bereich 18 des Bauteiles 14 und dem ringförmigen Abschnitt 19 des Bauteiles 6 eingespannt.

Wie aus den Figuren 1 bis 3 ersichtlich ist, erfolgt die axiale Verbindung zwischen den Bauteilen 6 und 14 hier mittels Nietverbindungen 37, die hier im radialen Erstreckungsbereich des Dichtringes 36 vorgesehen sind. Die Nietverbindungen 37 sind mittels Nietelementen 38, die aus dem Bauteil 6 axial herausgeformt sind, gebildet. Der axial überstehende Bereich der warzenartigen Nietelemente 38 ist zu einem Nietkopf 39 verformt worden. Obwohl die Nietelemente 38 auf einem gleichen Durchmesser über den Umfang verteilt vorgesehen werden können, ist bei dem dargestellten Ausführungsbeispiel eine zickzackartige Anordnung dieser Nietelemente 38 vorhanden. Die hier ausgewählte, umfangsmäßige Verteilung der Nietelemente 38 ist anhand des in Figur 3 gezeigten Lochmusters erkennbar. Die einzelnen Löcher bzw. Ausnehmungen 40 sind bei der in Figur 3 dargestellten Verteilung in zwei Gruppen unterteilt, von denen die eine auf einem größeren Durchmesser und die andere auf einem kleineren Durchmesser angeordnet ist.

Der umfangsmäßige Abstand zwischen den einzelnen Öffnungen 40 ist derart bemessen, dass beim Verbinden der beiden Bauteile 6 und 7 diese insbesondere in den Bereichen 18 und 19 keine Verformung erfahren, so dass eine einwandfreie Abdichtung des Raumes 32 gewährleistet wird.

Falls notwendig, kann der Dichtungsring 36 eine Montagemarkierung 41 aufweisen, die einer entsprechenden Gegenmarkierung am Bauteil 6 und/oder Bauteil 14 zuordenbar ist. Eine derartige Markierung 41 ist insbesondere dann vorteilhaft, wenn eine in Umfangsrichtung unsymmetrische bzw. ungleichmäßige Verteilung von Ausnehmungen 40 vorhanden ist.

Anstelle von einteiligen Nietwarzen 38 können auch getrennte Nietelemente zum Einsatz kommen.

Die ringförmige Dichtung 36 muss aus einem temperaturbeständigen, eine gewisse Elastizität aufweisenden Werkstoff hergestellt sein. Derartige Werkstoffe können auf Silikonbasis bzw. Gummibasis hergestellt sein. Eine besonders preisgünstige Realisierung einer derartigen Dichtung 36 kann durch Einsatz eines Materials auf Zellulosebasis, welches eine Latexbindung und/oder Latexbeschichtung aufweisen kann, realisiert werden. Durch die radiale Erstreckung der Dichtung 36 ist eine große Dichtfläche vorhanden.

Zweckmäßig ist es, wenn der umfangsmäßige Abstand zwischen zwei Verbindungsstellen 37 in der Größenordnung zwischen 3 und 10 cm liegt.

Besonders zweckmäßig kann es sein, wenn vor Bildung der Nietköpfe 39 die beiden Bauteile 6 und 14 bzw. die beiden Bereiche 18 und 19 axial aufeinander zu belastet werden, wobei die Belastung ausreichend groß sein sollte, um eine gewisse axial elastische Verformung des Dichtungsringes 36 zu gewährleisten. Durch eine derartige Verformung wird eine einwandfreie Abdichtung sowie ein Ausgleich von Toleranzen erzielt.

Weiterhin kann es zweckmäßig sein, wenn zumindest zwei Nietelemente 38 vor Bildung der Nietköpfe 39 axial eine etwas größere Erstreckung aufweisen als die anderen, da dadurch das Auffädeln des Bauteils 14 auf die Nietelemente 38 vereinfacht wird. So können beispielsweise zwei oder drei derartiger Nietelemente etwas länger ausgebildet werden. Vorteilhaft kann es dabei sein, wenn die mit solchen Nietelementen zusammenwirkenden Ausnehmungen 40 im Dichtring 36 oder 42 im Blechteil 14 eine Markierung aufweisen, wodurch, falls notwendig, eine genaue, winkelige Montage der Bauteile 36 und 14 gegenüber dem Bauteil 6 gewährleistet werden kann. Die noch nicht verformten Nietelemente 38 können auch eine axiale Einfädelungsschräge bilden.

Die Dicke des Dichtungsringes 36 kann in der Größenordnung zwischen 0,25 und 0,8 mm liegen. Die radiale Breite kann vorzugsweise in der Größenordnung zwischen 1 und 3 cm liegen.

Anstelle von Nietverbindungen 37 oder zusätzlich zu den Nietverbindungen 37, kann eine axiale Sicherung zwischen den beiden Bauteilen 6 und 14 auch mittels Verstemmungen erfolgen. Hierfür kann beispielsweise der axial verlaufende Bereich 20 kürzer ausgestaltet werden, so dass er innerhalb der axialen Erstreckung des axialen Ansatzes 10 endet. An dem axialen Ansatz 10 können dann mehrere über den Umfang verteilte Anformungen bzw. Verstemmungen vorgesehen werden, die mit dem freien Ende des axial verlaufenden Bereiches 20 zusammenwirken und somit das Bauteil 14 gegenüber dem Bauteil 6 axial sichern.

Durch die erfindungsgemäße Verwendung einer preisgünstigen ringförmigen Dichtung 36 kann die üblicherweise verwendete, über den ganzen Umfang der Kammer 32 verlaufende, Schweißverbindung entfallen.

Wie aus Figur 1 zu entnehmen ist, sind die Energiespeicher bzw. Schraubendruckfedern 30 und die diese aufnehmenden Kammerbereiche zumindest im Wesentlichen im radialen Erstreckungsbereich der Reibfläche 27 der Sekundärmasse 4 vorgesehen. Je nach Anwendungsfall können die Schraubendruckfedern 30 jedoch auch auf einem kleineren Durchmesser angeordnet werden, so dass sie zum Beispiel radial innerhalb der Reibfläche 27 zu liegen kommen. Zweckmäßig kann es jedoch auch sein, die Schraubendruckfedern 30 auf einen größeren Durchmesser zu verlagern, wobei dann in dem radial innen entstehenden Freiraum weitere Dämpfermittel vorgesehen werden können, beispielsweise ein zweiter Dämpfer mit Feder- und/oder Reibmittel, die parallel oder in Reihe geschaltet sein können mit den Federn 30.

Wie aus den Figuren 1 und 4 ersichtlich ist, kann die Drehschwingungsdämpfungseinrichtung 1 integrierte Befestigungsmittel, die hier durch Schrauben 43 gebildet sind, aufweisen. Zur radialen Führung der Schrauben 43 sind in dem Bauteil 21 Öffnungen 44 eingebracht, die mit den Öffnungen 8 im Bauteil 6 fluchten. Die Konturen der Ausnehmungen 44 besitzen zumindest Bereiche, die an die Schraubenköpfe 45 derart angepasst sind, dass eine radiale Führung der Schrauben 43 durch die Konturen der Ausnehmungen 44 gewährleistet wird. Diese radiale Führung kann dabei mit geringem Spiel erfolgen, es können jedoch auch im Bereich der Ausnehmungen 44 Mittel vorgesehen werden, die auf die Schraubenköpfe 45 eine Klemmwirkung bzw. Rückhaltewirkung ausüben, wodurch die Schrauben 43 in der dargestellten, zurückgezogenen Position lösbar gehaltert werden.

Um ein axiales Heraustreten der Schrauben 43 aus der Drehschwingungsdämpfungseinrichtung 1 zu vermeiden, sind bei dem dargestellten Ausführungsbeispiel axiale Anschläge 46 für die Schraubenköpfe 45 vorgesehen. Die axialen Anschläge 46 sind hier durch radial in die Öffnungen 44 hineinragende Nasen 47 gebildet, die durch plastische Verformung des das Bauteil 21 bildenden Bleches realisiert wurden. Bei dem dargestellten Ausführungsbeispiel sind einer Öffnung 44 jeweils drei derartige Nasen 47 zugeordnet.

Weiterhin ist aus Figur 1 und 4 ersichtlich, dass der radial innere Bereich des Flansches 28 derart ausgebildet ist, dass dieser ebenfalls eine radiale Führung der Schraubenköpfe 45 gewährleistet.

Wie insbesondere aus den Figuren 1 und 5 zu entnehmen ist, sind die laschenförmigen Befestigungsbereiche 25 aus dem Blechformteil 21 herausgeformt, indem sie radial außen durch einen Trennschnitt 49 und seitlich durch Ausschnitte 50 gegenüber dem umgebenden Blechmaterial getrennt werden. Radial innen sind die Laschen 25 einstückig mit dem Blechformteil 21. In den Laschen 25 sind Öffnungen 51 zur Bildung einer Nietverbindung 31 vorgesehen. Die freigeschnitten Laschen 25 sind, wie aus den Figuren 1, 4 und 5 erkennbar ist, in axialer Richtung derart verformt, dass sie gegenüber den benachbarten Blechbereichen des Bauteiles 21 axial versetzt sind. In Abänderung der dargestellten Ausführungsform könnten die Laschen 25 auch radial außen eine Verbindung mit dem Bauteil 21 besitzen. Gemäß einer weiteren Variante könnten die Laschen 25 auch um 180° verdreht ausgebildet werden, also radial außen einstückig in das Blechformteil 21 übergehen und radial innen einen Trennschnitt 49 oder einen Ausschnitt aufweisen. Gemäß einer anderen Variante könnte das durch einen Trennschnitt 49 bzw. Ausschnitt gebildete Ende einer Lasche 25 auch in Umfangsrichtung weisen. Bei einer derartigen Ausführungsform wären dann die Ausschnitte 50 radial innerhalb und radial außerhalb einer derartigen Lasche angeordnet. Grundsätzlich können anstatt von Aus- bzw. Freischnitten 50 ebenfalls Trennschnitte Verwendung finden. Bei letzterer Ausgestaltungsmöglichkeit ist es zweckmäßig, wenn dann im Fußbereich einer Lasche 25, also in dem Bereich, in dem die Lasche 25 in das Bauteil 21 übergeht, zumindest ein kleiner Ausschnitt vorhanden ist, von dem aus die Trennschnitte ausgehen.

Wie bereits erwähnt, können die hier durch die Laschen 25 gebildeten Befestigungsbereiche für den Flansch 28 auch lediglich durch axiale, taschenförmige Anprägungen gebildet werden, wodurch, falls erforderlich, eine höhere Festigkeit bzw. Steifigkeit im Bereich der Befestigungsstellen (hier Nietverbindungen 31) gewährleistet ist. Bei einer derartigen Ausgestaltung können dann die evtl. notwendigen Belüftungsöffnungen in Umfangsrichtung zumindest zwischen den Anprägungen bzw. Befestigungsbereichen vorgesehen werden.

In Abänderung der in den Figuren 1, 4 und 5 dargestellten Ausführungsform können zur Herstellung von Verbindungen 31 zwischen dem flanschartigen Bauteil 28 und dem Blechformteil 14 auch am flanschartigen Bauteil 28 laschenförmige Befestigungsbereiche 25 und/oder axiale Anprägungen, die in Richtung des Bauteiles 14 axial versetzt sind, vorgesehen werden. Die laschenförmigen Befestigungsbereiche 25 und/oder die axialen Anprägungen können dabei in ähnlicher Weise hergestellt und ausgebildet sein, wie dies in Zusammenhang mit dem Blechformteil 21 beschrieben wurde. Es ist auch möglich sowohl am Blechformteil 14 als auch am flanschartigen Bauteil 28 derart ausgebildete Befestigungsbereiche (Laschen und/oder Anprägungen) vorzusehen, die axial aufeinander zu weisen bzw. sich aneinander axial abstützen und miteinander verbunden sind.

Gemäß einer anderen Ausgestaltungsmöglichkeit können zumindest einige der radiale Arme bildenden, laschenartigen Befestigungsbereiche 25 derart ausgebildet werden, dass sie gleichzeitig zur Beaufschlagung der Federn 30 dienen können und somit die Funktion der radialen Ausleger 29 des flanschartigen Bauteils 28 übernehmen. Bei einer derartigen Ausgestaltung kann somit gegebenenfalls das flanschartige Bauteil 28 ganz entfallen. Eine derartige Ausführungsform ist insbesondere dann von Vorteil, wenn lediglich zwei oder drei lange Federn 30 über den Umfang verteilt angeordnet werden. Eine derartige Ausgestaltung ist insbesondere dann vorteilhaft, wenn die Federn 30 auf einem verhältnismäßig kleinen Durchmesser angeordnet sind. Bei Verwendung von laschenförmigen Befestigungsbereichen 25 zur Beaufschlagung der Federn 30 können diese entsprechend länger radial nach außen hin ausgeführt sein. Bei Verwendung solcher laschenförmigen Bereiche zur Beaufschlagung der Federn 30 kann die in den Figuren dargestellte Öffnung 51 entfallen. Zweckmäßig ist es, wenn die Federn 30 in Bezug auf die Reibfläche 27 der Sekundärmasse 4 auf einem verhältnismäßig kleinen Durchmesser angeordnet werden, so dass sich die zur Bildung der Laschen in das Bauteil 21 eingebrachten Ausschnitte nicht oder nur verhältnismäßig gering in den radialen Erstreckungsbereich der Reibfläche 27 erstrecken.

Aus Figur 1 ist noch erkennbar, dass die die Reibfläche 27 bildende Bereiche des Blechformteils 21 axial gegenüber den radial innerhalb der Reibfläche 27 vorgesehenen Bereichen hervorstehen.

Das Blechformteil 21 besitzt radial außen Befestigungsbereiche 52 für den Deckel bzw. das Gehäuse einer Reibungskupplung. Die Befestigungsbereiche 52 sind hier mittels Trennschnitten und/oder Freischnitten in radialer Richtung gegenüber den angrenzenden inneren Bereichen des Blechformteils 21 getrennt und axial aufgestellt.

Das Zweimassenschwungrad 2 kann als Gesamteinheit gewuchtet werden. Das Wuchten kann, falls notwendig, auch gemeinsam mit dem auf die Sekundärmasse 2 montierten Kupplungsaggregat, bestehend aus zumindest einer Kupplungsscheibe und einer Kupplung, gewuchtet werden, wobei gegebenenfalls das Zweimassenschwungrad für sich vorgewuchtet werden kann und erst danach das Gesamtaggregat.

Zweckmäßig kann es auch sein, zumindest eine der Massen 3, 4 vor dem Zusammenbau des Zweimassenschwungrades vorzuwuchten. Falls notwendig, kann ein Nachwuchten des zusammengebauten Zweimassenschwungrades erfolgen.

Bei Verwendung von Stahlblech zur Bildung der Massen, kann das Wuchten in einfacher Weise durch Materialabtragung, die spanabhebend erfolgen kann, stattfinden. So können zum Beispiel insbesondere in die Sekundärmasse 4 Bohrungen oder Einfräsungen eingebracht werden, die sich nur über einen Teil der Materialdicke oder über die gesamte Materialdicke erstrecken. Die Materialentfernung kann dabei beispielsweise auf der der Reibfläche 27 abgewandten Seite der Sekundärmasse 4 erfolgen. Zweckmäßig kann es auch sein, wenn eine derartige Materialabtragung im äußeren Randbereich des entsprechenden Bauteils, also beispielsweise des Blechformteils 14, erfolgt. In vorteilhafter Weise können für den Wuchtvorgang auch mehrere über den Umfang verteilte, spezielle Bereiche vorgesehen werden. Derartige Bereiche können beispielsweise durch einzelne hervorstehende Zungen oder Nocken am Außenbereich des Blechformteils 14 oder 6 gebildet sein. Es können jedoch auch axiale Vorsprünge, zum Beispiel warzenartige oder taschen- bzw. sickenförmige Anprägungen, hierfür vorgesehen werden. Die zum Wuchten notwendige Materialabtragung kann auch mittels eines Trennschnittes bzw. durch einen Abhackvorgang erfolgen. Dies ist insbesondere vorteilhaft, wenn die zum Wuchten zu entfernenden Materialbereiche am Außenumfang der entsprechenden Bauteile vorgesehen sind.

In Figur 6 ist eine alternative Ausgestaltungsform einer Stützschale 133 für Schraubendruckfedern 130 dargestellt. Die Stützschale 133 kann anstelle der in Figur 1 dargestellten Schale 33 eingesetzt werden, wobei, falls erforderlich, die angrenzenden Bauteile, zum Beispiel 6 und 14, entsprechend angepasst werden müssen. Aus Figur 6 ist ersichtlich, dass die Stützschale 133 abgewinkelte Bereiche 153, 154 besitzt bzw. dachförmig ausgebildet ist. Durch die dargestellte Formgebung der Schale 133 erfolgt die radiale Abstützung der Windungen einer Feder 130 über zwei Abstützpunkte bzw. Abstützbereiche 155, 156.

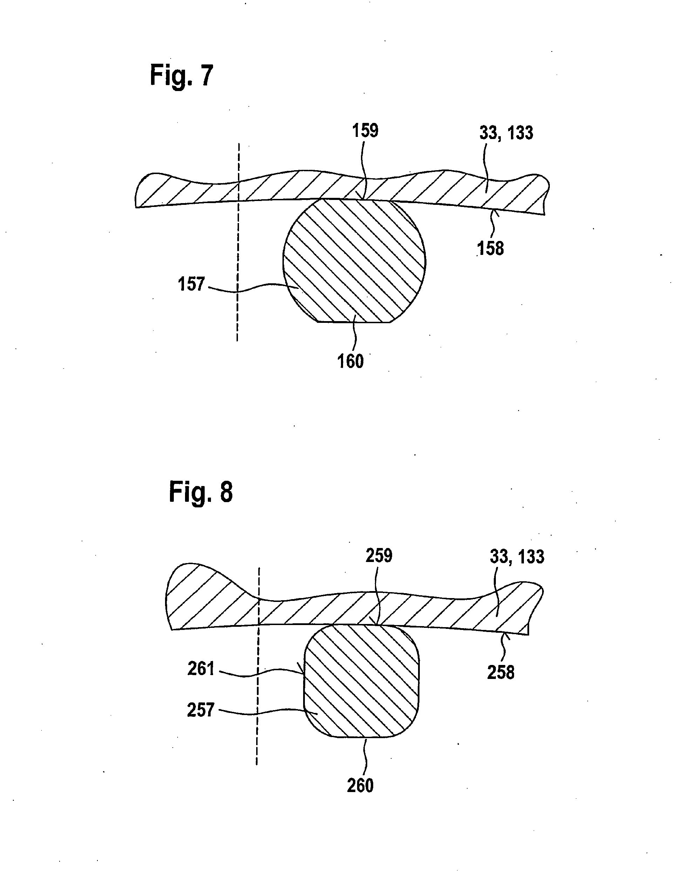

Die in den Figuren 7 und 8 dargestellten Drahtquerschnitte 157 und 257 besitzen zumindest eine Anformung 159, 259, die eine Vergrößerung des zwischen den Windungen 160, 260 und der radialen Abstützfläche 158, 258 vorhandenen Kontaktes ermöglichen.

Durch das Vorsehen von Anformungen bzw. Abflachungen 159 wird gewährleistet, dass die zwischen der radialen Abstützfläche 158 und den Windungen 160 einer Feder 130 (Figur 6) vorhandene Kontaktfläche wesentlich vergrößert werden kann. Dadurch kann gewährleistet werden, dass der Verschleiß an den Federwindungen 160 und/oder der Abstützfläche 158 verringert werden kann. Durch Vergrößerung der Kontaktfläche zwischen den Windungen 160 und der Abstützfläche 158 wird die Flächenpressung reduziert. Durch Anbringung einer Anformung 159 kann weiterhin der Aufbau eines Schmierfilmes zwischen den Windungen 160 und der Abstützfläche 158 begünstigt werden. Für den Aufbau eines Schmierfilmes beim Entlanggleiten der Windungen 160 an der Abstützfläche 158 kann es auch vorteilhaft sein, wenn der Krümmungsradius der Anformung 159 geringfügig kleiner ist als der der Abstützfläche 158. Es kann auch vorteilhaft sein, die Anformung 159 leit konkav auszubilden, so dass, in Umfangsrichtung betrachtet bzw. in Längsrichtung der Abstützfläche 158, zwei geringfügig beabstandete Abstützbereiche an den Windungen 160 gebildet werden. Aufgrund der konkaven Ausgestaltung kann zwischen diesen beiden Abstützbereichen eine geringe Fettmenge aufgenommen werden.

Der in Figur 7 dargestellte Drahtquerschnitt 157 besitzt sowohl radial außen als auch radial innen eine flächige Anformung 159, die hier gleich ausgestaltet sind, jedoch auch unterschiedlich sein können. Um den gewünschten Effekt eines verringerten Verschleißes bzw. einer besseren Schmierfilmbildung zu erzielen, genügt es jedoch, wenn lediglich die mit dem Bezugszeichen 159 versehene Anformung vorgesehen wird und die restlichen Konturen des Drahtes im Wesentlichen ringförmig sind.

Darüber hinaus kann der Drahtquerschnitt 157 zumindest auf einer umfangsmäßigen Seite eine weitere Anformung, wie zum Beispiel eine Abflachung, besitzen. Durch eine derartige Anformung wird das Blockverhalten bzw. die Blockfestigkeit der mit derartigen Drahtquerschnitten gebildeten Schraubenfedern vergrößert. In diesem Zusammenhang wird insbesondere auf die DE 44 06 826 A1 und die DE 43 06 895 C1 verwiesen, in denen Federn mit entsprechenden, zumindest seitlichen Anformungen sowie Verfahren zur Herstellung solcher Federn beschrieben sind. Die in Figur 7 gezeigten Anformungen 159 können mit dem gleichen Verfahren hergestellt werden.

In Figur 8 ist ein Drahtquerschnitt 257 dargestellt, der eine rechteckige Grundgestalt mit abgerundeten Ecken besitzt. Die Windung 260 stützt sich in ähnlicher Art wie in Zusammenhang mit Figur 7 für die Windung 160 beschrieben, an einer Verschleißschutzschale 33 bzw. 133 ab. Die Fläche 259 der Windungen 260 kann in ähnlicher Weise ausgebildet und hergestellt sein, wie die Fläche 159 gemäß Figur 7. Ähnliches gilt auch für die Seitenflächen 261 der Windungen 260.

Obwohl die Anformungen 159, 259 und 261 einem Runddraht angeprägt werden können, der gegebenenfalls, wie in dem vorerwähnten Stand der Technik beschrieben, bereits Federeigenschaften aufweist, kann es zweckmäßig sein, einen vorprofilierten Draht zum Wickeln einer Feder zu verwenden. Es kann auch ein nur teilweise vorprofilierter Draht Verwendung finden, der nachträglich, wie in dem vorerwähnten Stand der Technik beschrieben, eine Anformung 159 oder 161 bzw. 259 erhält.

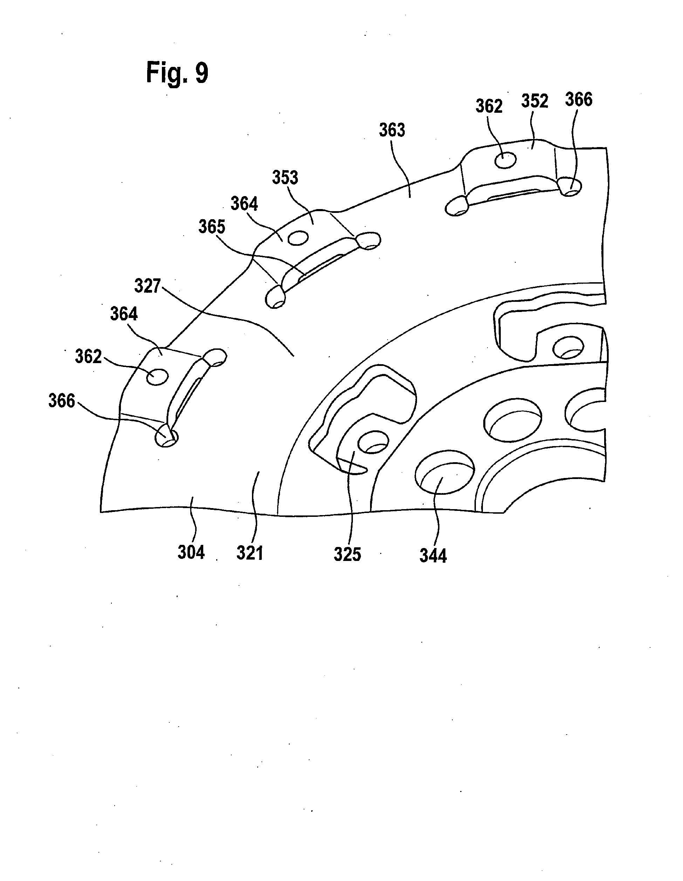

Die in Figur 9 teilweise dargestellte Sekundärmasse 304 ist im radial inneren Bereich ähnlich ausgebildet wie die Sekundärmasse 4 gemäß den Figuren 4 und 5. Sie besitzt also laschenförmige Befestigungsbereich 325 sowie Ausnehmungen 344 zur Verschraubung des entsprechenden Zweimassenschwungrades an der Abtriebswelle einer Brennkraftmaschine. Das aus einem Stahlblech herausgeformte Bauteil 321 besitzt radial außerhalb der Reibfläche 327 für eine Kupplungsscheibe eine Mehrzahl von über den Umfang verteilten axialen Erhebungen 352, welche beispielsweise als Befestigungsbereiche 353 für den Randbereich eines Kupplungsgehäuses bzw. eines Kupplungsdeckels dienen. Bei dem dargestellten Ausführungsbeispiel sind die einzelnen Erhebungen 352 gleichmäßig verteilt und auch gleich ausgebildet. Diese könnten jedoch auch eine unterschiedliche winkelmäßige Ausdehnung aufweisen und, falls erforderlich, auch gegenüber der Reibfläche 327 eine unterschiedliche axiale Höhe. Die axialen Erhebungen 352 besitzen zumindest eine Öffnung 362, die beispielsweise durch Stanzen gebildet ist. Die Öffnungen 362 sind beispielsweise zur Aufnahme einer Befestigungsschraube für das Kupplungsgehäuse ausgebildet. Die Ausnehmungen 362 können jedoch auch derart ausgebildet sein, dass sie einen Zentrier- bzw. Positionierstift aufnehmen, der mit einer entsprechend angepassten Ausnehmung im Kupplungsgehäuse zusammenwirkt. Ein derartiges Zentriermittel kann jedoch auch durch Herausformen eines axial hervorstehenden, zylinderförmigen Ansatzes aus einer Erhebung 352 und/oder dem Kupplungsdeckel gebildet sein. Die zwischen den axialen Erhebungen 352 verbleibenden Vertiefungen 363 dienen zur Bildung einer Kühlluftzirkulation bei montierter Reibungskupplung.

Aus Figur 9 ist ersichtlich, dass die Erhebungen 352 plateauähnliche Flächen 364 bilden, die axial gegenüber der Reibfläche 327 um den erforderlichen Abstand versetzt sind. Aus Figur 9 ist ersichtlich, dass dieser Abstand größer ist als die Ausgangsmaterialdicke des Stahlbleches.

Die axialen Erhebungen 352 sind mittels eines Trennschnittes 365 und gleichzeitigem axialen Anprägen des Blechmaterials gebildet. Bei der Bildung eines Trennschnittes wird das Blechmaterial lediglich durchtrennt, also die an den Schnitt angrenzenden Bereiche senkrecht zur Blechebene verschoben und getrennt. Solche Materialverschiebungen können jedoch auch ohne Durchtrennung des Bleches erfolgen, insbesondere wenn die Verschiebung kleiner als die Materialdicke ist.

Um die Bildung der Trennschnitte 365 zu begünstigen, sind bei dem dargestellten Ausführungsbeispiel noch zusätzliche, hier im Wesentlichen kreisförmig ausgebildete Freischnitte 366 vorgesehen. Die Öffnungen bzw. Freischnitte 366 sind in Umfangsrichtung der Erhebungen 352 betrachtet jeweils beidseits einer derartigen Erhebung 352 vorgesehen.

Die Verwendung von Trennschnitten 365 ermöglicht eine zumindest radiale, gedrungene Bauweise der Sekundärmasse 304, da die Reibfläche praktisch bis zu den inneren Bereichen der Erhebungen 352 reichen kann. Die axialen Erhebungen 352 könnten zwar auch lediglich durch Änprägungen gebildet werden, jedoch würde dann in radialer Richtung betrachtet eine gewisse Blechmaterialdicke im Bereich der hier verwendeten Trennschnitte 365 verbleiben. Dadurch würde der äußere Reibradius der Fläche 327 um diese Materialdicke entsprechend verringert, oder aber es müsste der äußere Radius der Sekundärmasse 304 um diese Materialdicke entsprechend vergrößert werden, was jedoch bei den heute im Automobilbau vorhandenen, sehr engen Einbauverhältnissen in den meisten Fällen nicht möglich ist.

Die Ausgestaltung der Sekundärmasse als Stahlblechbauteil eröffnet die Möglichkeit, dieses praktisch werkzeugfallend auszugestalten, so dass nach den unter einer Presse erfolgenden Anpräge- und Schnittvorgängen zumindest keine wesentlichen spanabhebenden Nachbearbeitungen notwendig sind. Dies gewährleistet eine sehr kostengünstige Herstellung derartiger Schwungmassen bzw. Kupplungsbauteile.

Zur Befestigung eines Kupplungsgehäuses kann die erfindungsgemäß ausgestaltete Sekundärmasse 4, 304 auch einstückig angeformte Nietwarzen besitzen, die axial durch entsprechende Ausnehmungen im Kupplungsgehäuse hindurchragen und einen Nietkopf angeformt bekommen. Derartige Nietwarzen können beispielsweise anstelle von Ausnehmungen 362 im Bereich von Erhebungen 352 vorgesehen werden. Diese Nietwarzen können in ähnlicher Weise ausgebildet bzw. hergestellt sein, wie die zur Bildung der Nietverbindungen 37. Nietwarzen können auch am Kupplungsgehäuse angeformt sein.

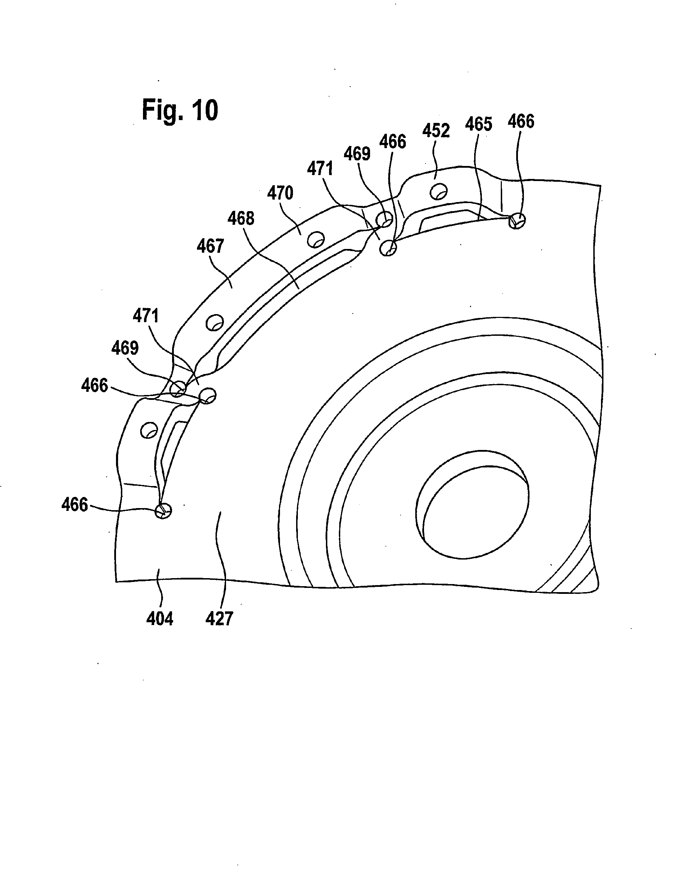

Bei der in Figur 10 dargestellten Ausführungsvariante einer Sekundärmasse 404 sind ebenfalls axiale Erhebungen 452, 467 vorhanden, die gegenüber der Ebene der Reibfläche 427 axial hervorstehen. Die axialen Vorsprünge bzw. Erhebungen 452 sind ähnlich hergestellt und ausgebildet, wie die Erhebungen 352 gemäß Figur 9.

Bei der Ausführungsform gemäß Figur 10 ist jedoch zumindest zwischen einzelnen, in Umfangsrichtung aufeinander folgenden Paaren von Erhebungen 452 eine umfangsmäßig länger ausgebildete Erhebung 467 vorgesehen. Die axiale Erhebung 467 ist bei dem dargestellten Ausführungsbeispiel ebenfalls mittels eines Trennschnittes 468 gebildet, der in den Endbereichen in Öffnungen 469 mündet, welche Entlastungsöffnungen darstellen. Wie aus Figur 10 ersichtlich ist, sind die Öffnungen 469 radial außerhalb einer Öffnung 466 zur Bildung einer Erhebung 452 angeordnet. Bei dem hier dargestellten Ausführungsbeispiel sind die Öffnungen 469 und 466 in Umfangsrichtung derart verteilt, dass jeweils eine Öffnung 469 und eine Öffnung 466 praktisch radial übereinander zu liegen kommen.

Bei der Ausführungsform gemäß Figur 10 ist eine gewisse Überschneidung der Trennschnitte 465 und 468 in Umfangsrichtung vorhanden. Radial zwischen den Trennschnitten 465 und 468 und/oder den Freischnitten bzw. Öffnungen 466, 469 verbleibt ein stegartiger Bereich 471.

Aus Figur 10 ist auch erkennbar, dass die Erhebungen 452 und 467 in radialer Richtung unterschiedlich breit ausgebildet sind.

Bei der in Figur 10 dargestellten Ausführungsform ist der axiale Versatz zwischen den durch die Erhebungen 452 und 467 gebildeten Flächen 453, 470 und der Ebene der Reibfläche 427 größer als bei Figur 9. Dieser axiale Versatz beträgt hier zumindest die doppelte Materialdicke des Ausgangsstahlbleches zur Bildung der Sekundärmasse 404.

Im Bereich der Erhebungen 452 und/oder 467 können Ausnehmungen und/oder Anformungen vorgesehen werden, wie dies in Zusammenhang mit Figur 9 beschrieben wurde.

In Figur 10 sind die in Zusammenhang mit den vorangegangenen Figuren beschriebenen laschenförmigen Befestigungsbereiche (zum Beispiel 325) und die Verschraubungsöffnungen (zum Beispiel 344) nicht vorhanden. Der radial innere Bereich der Sekundärmasse 404 kann jedoch ähnlich ausgebildet sein, wie dies beispielsweise in Figur 9 der Fall ist.

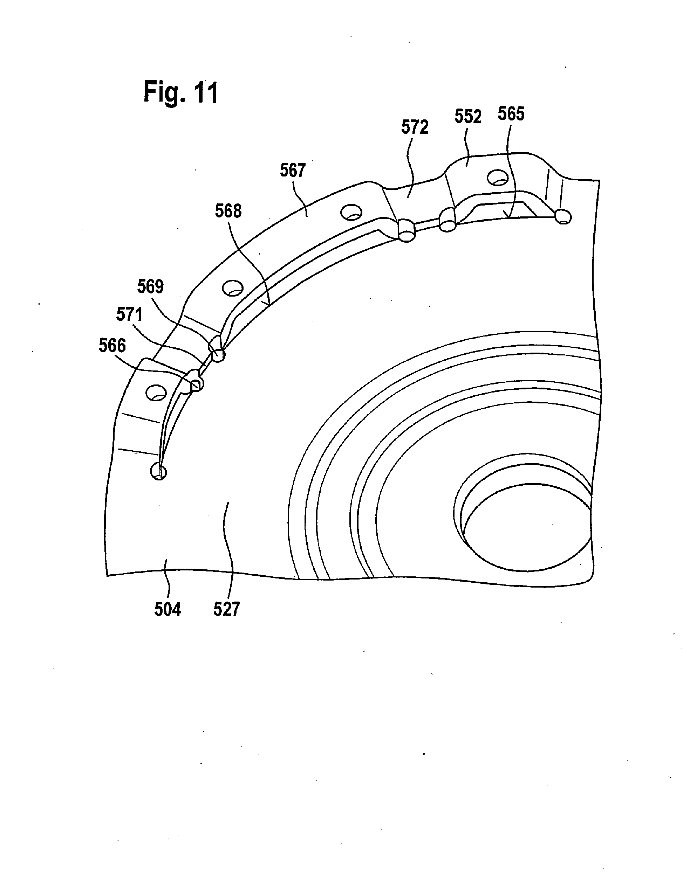

Die in Figur 11 dargestellte Sekundärmasse 504 besitzt ebenfalls Erhebungen 552, 567 am Außenrand, welche Befestigungsbereiche für ein Kupplungsgehäuse bilden. Diese Erhebungen 552, 567 sind ähnlich ausgebildet und angeordnet, wie die Erhebungen 452 und 467 gemäß Figur 10. Der wesentliche Unterschied liegt in der Ausgestaltung des zwischen den aufeinander folgenden Erhebungen 552 und 567 vorhandenen Verbindungsbereiches 572. Es ist ersichtlich, dass die einander zugewandten Enden der Trennschnitte 565 und 568 bzw. der Freischnitte 566 und 569 in Umfangsrichtung beabstandet angeordnet sind, so dass ein Verbindungssteg 571 verbleibt. Die Verbindungsstege 571 koppeln die Bereiche 572 mit den radial weiter innen liegenden, eine Reibfläche 527 bildenden Bereichen.

Die Freischnitte 466, 469, 566, 569 werden in das Blechmaterial eingebracht, bevor die Trennschnitte 465, 468, 565, 568 erzeugt werden.

Im Bereich der Verbindungen 571 kann das Blechmaterial zumindest teilweise über die Dicke durchgestellt sein, so dass ein Restbereich der Materialdicke die radialen Verbindungen 571 bildet. Die Bereiche 572 besitzen gegenüber der Reibfläche 527 einen kleineren axialen Versatz als die Befestigungsbereiche bildenden Erhebungen 552 und 567.

Die in Zusammenhang mit Figur 7 und 8 beschriebenen Drahtquerschnitte 157, 257 können in vorteilhafter Weise auch bei einer Schraubenfeder Verwendung finden, die radial innerhalb der Windungen einer Außenfeder eingesetzt wird. Solche kombinierte Energiespeicher, welche zumindest aus einer größere Windungen aufweisenden Außenfeder und zumindest einer kleinere Windungen aufweisenden Innenfeder besteht, sind beispielsweise durch die DE 196 03 248 A1 und die DE 196 48 342 sowie durch den bereits genannten Stand der Technik bekannt geworden.

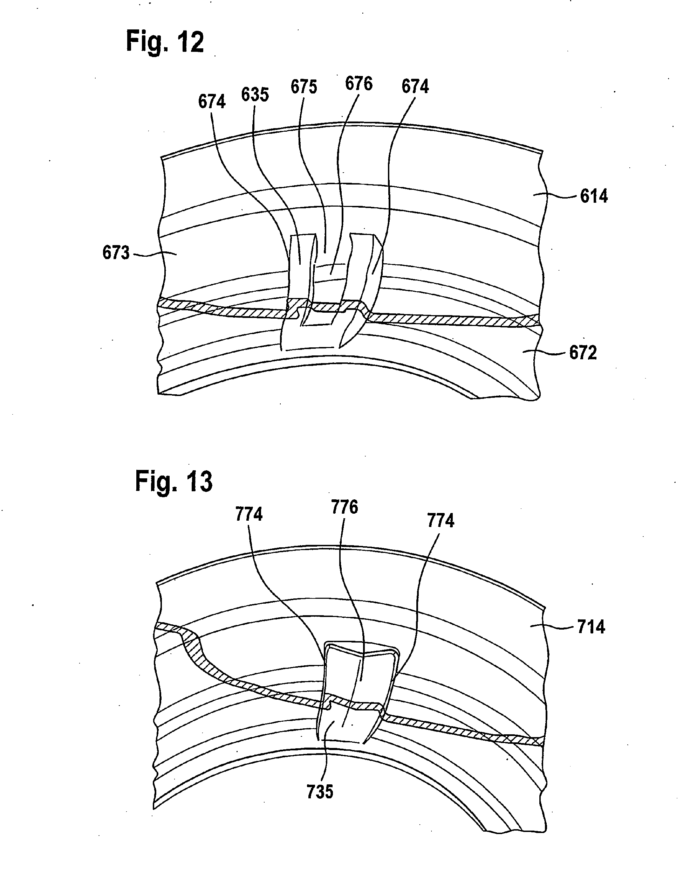

Die durch axiale Anprägungen gebildeten Beaufschlagungsbereiche, zum Beispiel 34, 35 in Figur 1 für die Federn 30, können in vorteilhafter Weise durch Anformungen zumindest in den die Beaufschlagungsbereiche bzw. Abstützbereiche für die Federn 30 bildenden Blechabschnitte versteift werden. In den Figuren 12 und 13 sind zwei solche Maßnahmen dargestellt. Diese Maßnahmen sind insbesondere bei Verwendung von verhältnismäßig dünnen Blechen mit einer Dicke von ca. 1,5 bis 3 mm zweckmäßig. Ein solches dünnes Blechmaterial aus Stahl ist beispielsweise für die Herstellung des die ringförmige Kammer bzw. den ringförmigen Raum 32 begrenzenden Blechformteils 14 verwendet worden.

Das in Figur 12 dargestellte Blechformteil 614 hat einen axial angeprägten, ringförmigen Bereich 672, der eine ringförmige Mulde bildet, in der Energiespeicher, wie zum Beispiel Schraubenfedern, in ähnlicher Weise aufgenommen und geführt werden, wie dies in Zusammenhang mit Figur 1 in Verbindung mit den Schraubendruckfedern 30 und dem ringförmigen Blechformteil 14 beschrieben wurde. In das ringförmige Blechformteil 614 sind im radialen Erstreckungsbereich der ringförmigen Mulde 673 axiale Anprägungen 635 eingebracht, welche in die ringförmige Mulde 673 axial hineinreichen. Die Anprägungen 635 kommen zwischen zwei in Umfangsrichtung benachbarten Enden von Schraubenfedern zu liegen. Die Anprägungen 635 bilden Abstütz- bzw. Beaufschlagungsbereiche 674, die mit den entsprechenden Federenden zusammenwirken. Die taschenförmigen Anprägungen 635 besitzen - in Umfangsrichtung betrachtet - einen Materialversatz 675, der eine radiale Sicke 676 bildet. Die Sicke 676 ist hier als flache Sicke ausgebildet und axial in Richtung von der ringförmigen Mulde 673 weg eingebracht, also in Richtung Außenseite bzw. Rückseite des Blechformteils 614. Der umfangsmäßige Verlauf der dargestellten Anprägung 635 und der benachbarten Materialbereiche sind in Figur 12 durch den schraffierten Flächenbereich dargestellt. Die dickenmäßige Materialverteilung im Bereich einer Anprägung 635 kann durch entsprechende Ausbildung des Anprägewerkzeuges gegenüber dem dargestellten abweichen. So ist es zum Beispiel denkbar, die Materialdicke im Bereich einer Sicke 676 dünner auszulegen und das verdrängte Material zur Verdickung der benachbarten Bereiche, insbesondere der Beaufschlagungsbereiche 674, zu verwenden. Durch das Einbringen von Versteifungsmaßnahmen im Bereich der Anprägungen 635 kann die Elastizität bzw. die Steifigkeit der Beaufschlagungsbereiche 635 sowie der angrenzenden Materialbereiche beeinflusst werden. Insbesondere kann dadurch eine Versteifung des Beaufschlagungsbereiches 635 und somit eine Erhöhung der Anschlagsteifigkeit für die Federn erzielt werden.

Bei der in Figur 13 dargestellten Ausführungsform ist ebenfalls eine axiale Anprägung 735 in das Blechformteil 714 eingebracht. Die axiale Anprägung 735 bildet Abstütz- bzw. Beaufschlagungsbereiche 774 für die Endbereiche von Schraubendruckfedern. Aus Figur 13 ist erkennbar, dass, in Umfangsrichtung einer Anprägung 735 betrachtet, das Blechmaterial dachförmig in Richtung der Mitte einer Anprägung 735 ausgebildet ist. Diese dachförmige Ausgestaltung ist auch erkennbar anhand des in Figur 13 als schraffierte Fläche eingetragenen Materialverlaufes in Umfangsrichtung. Die dachförmige Anprägung 776 ist in Richtung der Rückseite des Blechformteils 714 aufgestellt, also axial in die gleiche Richtung ausgebildet wie die radiale, sickenförmige Anprägung 676 gemäß Figur 12.

Zur Versteifung bzw. Veränderung der Eigenschaften und/oder der Materialverteilungen im Bereich der Anprägungen 635, 735 können auch andere Anformungen bzw. Vertiefungen und/oder Erhebungen, die vorzugsweise sickenförmig ausgebildet sein können, vorgesehen werden. Dabei können auch mehrere Sicken vorgesehen werden, die radial und/oder in Umfangsrichtung und/oder gekreuzt zueinander verlaufen können. Derartige Versteifungen können auch durch im Querschnitt bogenförmig bzw. konvex oder konkav ausgebildete, längliche Anprägungen gebildet sein.

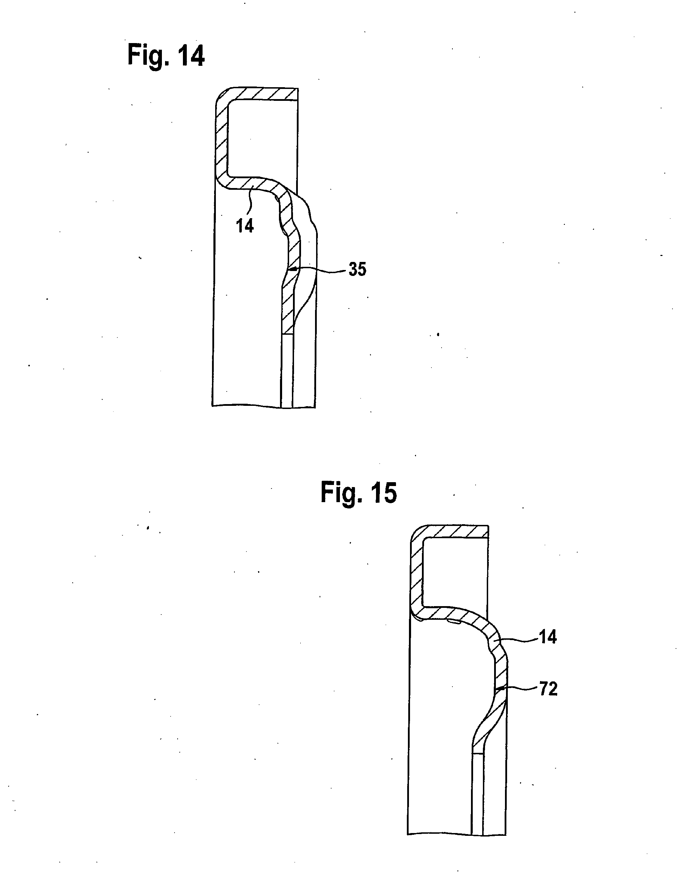

In den Figuren 14 und 15 ist eine besonders vorteilhafte Ausgestaltung des Blechformteils 14 gemäß Figur 1 dargestellt. Figur 15 zeigt einen Querschnittsverlauf des schalenartigen Blechformteils 14 im Bereich der umfangsmäßigen Anprägungen 72, im Bereich derer sich die Federn 30 in Umfangsrichtung erstrecken: Die Figur 14 zeigt einen Querschnittsverlauf im Bereich der axialen Anprägungen bzw. Anformungen 35, die zur Bildung der umfangsmäßigen Beaufschlagungsbereiche für die Federn 30 in das Blechformteil 14 eingebracht sind. Aus den Figuren 14 und 15 ist ersichtlich, dass im Bereich der axialen Anformungen 35 die radiale Grundgeometrie des Blechmaterials ähnlich ist mit der Grundgeometrie des radialen Materialverlaufes im Bereich der Anformungen bzw. Anprägungen 72. Der axiale Versatz zwischen dem radialen Verlauf der Anformungen 35 und dem radialen Verlauf der Anprägungen 72 soll in etwa konstant gehalten werden, also praktisch ein Parallelverlauf des Blechmaterials vorhanden sein, welches die Anformungen 35 bzw. die Anprägungen 72 bildet. Dadurch kann ein im Wesentlichen gleicher Umformungsgrad des Blechmaterials erzielt werden.

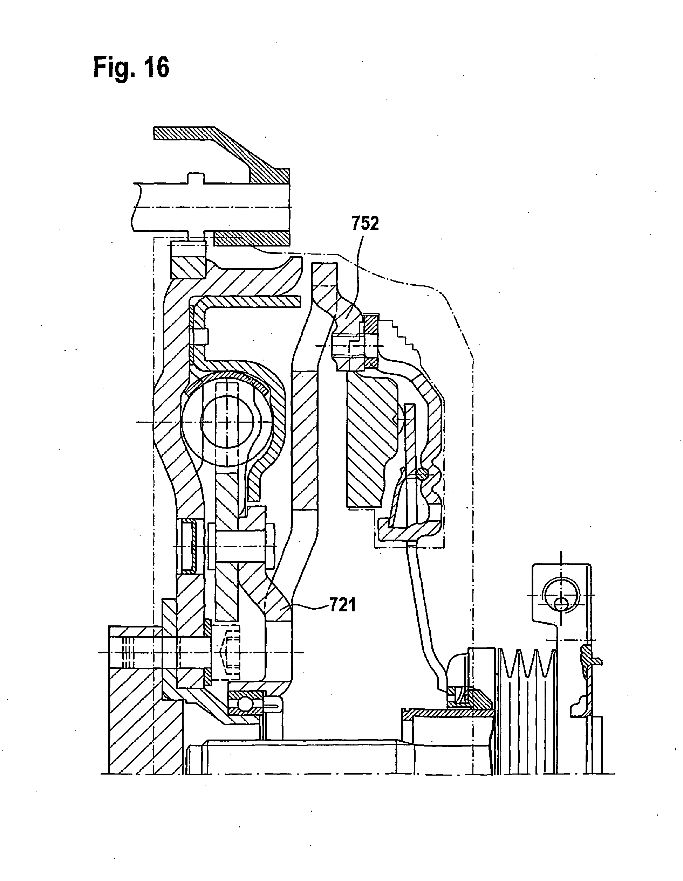

Bei der in Figur 16 dargestellten Konstruktion eines Zweimassenschwungrades ist die Sekundärmasse ebenfalls durch ein Blechformteil 721 gebildet, das sich gegenüber den bereits beschriebenen Ausführungsformen insbesondere dadurch unterscheidet, dass die Befestigungsbereiche 752 durch axial aufgestellte, laschenförmige Blechabschnitte gebildet sind, die radial außen mit den das Blechformteil 721 bildenden übrigen Blechabschnitten verbunden sind. Die Befestigungsbereiche 752 können in ähnlicher Weise durch Trennschnitte und Umschneidungen gebildet werden, wie dies in Zusammenhang zum Beispiel mit den Befestigungsbereichen 25 beschrieben wurde.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1.: Drehschwingungsdämpfungseinrichtung
- 2.: Zweimassenschwungrad
- 3.: Primärmasse
- 4.: Sekundärmasse
- 5.: Lagerung
- 6.: Blechformteil, Bauteil
- 7.: radial verlaufender Bereich
- 8.: Verschraubungsöffnungen
- 9.: axialer Ansatz, Bereich
- 10.: axialer Ansatz
- 11.: Anlasserzahnkranz
- 12.: ringförmiger Bereich
- 13.: Geberblech
- 14.: Blechformteil, Bauteil
- 15.: topfförmiger Bereich
- 16.: radiale Abschnitte
- 17.: axiale Abschnitte
- 18.: ringförmiger Bereich
- 19.: ringförmiger Abschnitt, Bereich
- 20.: axial verlaufender Bereich
- 21.: Blechformteil
- 22.: axialer Ansatz
- 23.: zylindrische Aufnahme
- 24.: Gleitlagerbuchse
- 25.: Befestigungsbereiche (taschenförmige)
- 26.: axiale Durchlässe bzw. Kühlöffnungen
- 27.: Reibfläche
- 28.: flanschartiges Bauteil
- 29.: radiale Ausleger
- 30.: Federn
- 31.: Nietverbindungen
- 32.: ringförmiger Raum
- 33.: Verschleißschutz
- 34: axiale Anformungen

- 35: axiale Anformungen
- 36: ringförmige Dichtung
- 37: Nietverbindungen
- 38: Nietelemente
- 39: Nietkopf
- 40: Ausnehmungen
- 41: Montagemarkierung
- 42: Dichtring
- 43: Schrauben
- 44: Ausnehmungen
- 45: Schraubenköpfe
- 46: Axiale Anschläge
- 47: Nasen
- 48: -
- 49: Trennschnitt
- 50: Ausschnitt
- 51: Öffnungen
- 52: Befestigungsbereiche
- 72: umfangsmäßige Anprägungen

- 130: Feder
- 133: Stützschale
- 153: Abstützpunkt bzw. Abstützbereich
- 154: Abstützpunkt bzw. Abstützbereich
- 155: Abstützpunkt bzw. Abstützbereich
- 156: Abstützpunkt bzw. Abstützbereich
- 157: Drahtquerschnitt
- 158: Radiale Abstützfläche
- 159: Anformung
- 160: Windungen
- 161: Anformung

- 257: Drahtquerschnitt
- 259: Fläche
- 260: Windungen
- 261: Seitenflächen

- 304: Sekundärmasse
- 321: Bauteil
- 327: Reibfläche
- 344: Ausnehmungen
- 352: axiale Erhebungen
- 353: Befestigungsbereiche
- 362: Ausnehmungen
- 363: Vertiefungen
- 365: Trennschnitt
- 366: Freischnitte bzw. Öffnungen

- 404: Sekundärmasse
- 427: Reibfläche
- 452: axiale Erhebungen
- 453: Fläche
- 466: Öffnung
- 467: axiale Erhebungen
- 468: Trennschnitt
- 469: Öffnung
- 470: Fläche
- 471: stegartiger Bereich

- 504: Sekundärmasse
- 552: Erhebung
- 565: Trennschnitt
- 566: Freischnitt
- 567: Erhebung
- 568: Trennschnitt
- 569: Freischnitt
- 571: Verbindungssteg

- 614: Blechformteil
- 672: ringförmiger Bereich
- 673: ringförmige Mulde
- 674: Beaufschlagungsbereiche

- 676: radiale Sicke

- 714: Blechformteil
- 735: axiale Anprägung
- 774: Abstütz- bzw. Beaufschlagungsbereiche
- 776: dachförmige Anprägung

## Patentansprüche

1. Zweimassenschwungrad (2) bestehend aus einer mit der Abtriebswelle eines Motors verbindbaren Primärmasse (3) und einer mit der Eingangswelle eines Getriebes verbindbaren Sekundärmasse (4), die mittels mindestens einer Lagerung (5) konzentrisch und axial zueinander positioniert sind und entgegen der Wirkung einer Dämpfungseinrichtung mit Energiespeichern (30) zumindest begrenzt zueinander verdrehbar sind, wobei die Energiespeicher (30) in einer ringförmigen, von den Bauteilen (6, 14) der Primärmasse (3) gebildeten und ein viskoses Medium beinhaltenden, ringartigen Kammer (32) aufgenommen sind, wobei die die Kammer (32) bildenden Bauteile (6, 14) und die Sekundärmasse (4) Beaufschlagungsbereiche (29, 34, 35) für die Energiespeicher (30) tragen, wobei die ringartige Kammer (32) zumindest durch zwei Bauteile (6, 14) begrenzt ist, die radial außerhalb der Energiespeicher (30) sich gegenüberliegende flächige, ringförmige Bereiche (18, 19) besitzen, zwischen denen eine flächige, ringförmige Dichtung (36) eingespannt ist, wobei eines der Bauteile (14) eine Materialstärke aufweist, die 20 bis 50% der Materialdicke des anderen mit der Abtriebswelle eines Motors verbindbaren Bauteils (6) ist, und wobei das Bauteil (14) mit der geringeren Materialstärke einen topfförmigen Bereich (15) bildet, der in seinen ringförmigen Bereich (18) übergeht.

2. Zweimassenschwungrad nach Anspruch 1, **dadurch gekennzeichnet, dass** die Bauteile (6, 14) durch Blechformteile aus Stahl gebildet sind.

3. Zweimassenschwungrad nach Anspruch 1 oder 2, **dadurch gekennzeichnet, dass** die ringförmige Dichtung (36) ein Verhältnis zwischen der Ringbreite des diese bildenden Materials und der Dicke von 10 bis 100 aufweist.

4. Zweimassenschwungrad nach einem der Ansprüche 1 bis 3, **dadurch gekennzeichnet, dass** die ringförmige Dichtung (36) durch einen separaten Dichtring gebildet ist.

5. Zweimassenschwungrad nach einem der Ansprüche 1 bis 3, **dadurch gekennzeichnet, dass** die ringförmige Dichtung (36) durch eine aufgetragene Dichtmasse gebildet ist.

6. Zweimassenschwungrad nach Anspruch 1 bis 5, **dadurch gekennzeichnet, dass** die Verbindung zwischen den die ringförmigen Bereiche (18, 19) aufweisenden Bauteilen (6, 14) im Erstreckungsbereich der ringförmigen Dichtung (36) erfolgt.

7. Zweimassenschwungrad nach einem der Ansprüche 1 bis 6, **dadurch gekennzeichnet, dass** die Verbindung zwischen den die ringförmigen Flächen (18, 19) aufweisenden Bauteilen (6, 14) im radialen Erstreckungsbereich eines zwischen diesen aufgenommenen Dichtungsringes (36) liegt.

8. Zweimassenschwungrad nach einem der Ansprüche 1 bis 6, **dadurch gekennzeichnet, dass** die ringförmigen Bereiche (18, 19) durch Nietverbindungen (37) miteinander verbunden sind.

9. Zweimassenschwungrad nach Anspruch 8, **dadurch gekennzeichnet, dass** zur Bildung der Nietverbindungen (37) wenigstens eines der Blechformteile (6, 14) einstückig angeformte Nietwarzen aufweist, die sich axial durch Ausnehmungen des anderen Blechformteils im Erstreckungsbereich der ringförmigen Dichtung (36) hindurch erstrecken.

10. Zweimassenschwungrad nach Anspruch 8 oder 9, **dadurch gekennzeichnet, dass** Nietverbindungen (37) auf unterschiedlichen Radien angeordnet sind.

11. Zweimassenschwungrad nach einem der Ansprüche 8 bis 10, **dadurch gekennzeichnet, dass** die Nietverbindungen (37) in Umfangsrichtung zickzackförmig angeordnet sind.

12. Zweimassenschwungrad nach einem der Ansprüche 1 bis 11, **dadurch gekennzeichnet, dass** das die ringförmige Dichtung (36) bildende Material zumindest in axialer Richtung elastische Eigenschaften aufweist und in einem elastisch verspannten Zustand zwischen den ringförmigen Bereichen (18, 19) der beiden Blechformteile (6, 14) verbaut ist.

13. Zweimassenschwungrad nach einem der Ansprüche 1 bis 12, **dadurch gekennzeichnet, dass** die ringförmige Dichtung (36) durch einen auf Zellulosebasis hergestellten Dichtungsring gebildet ist.

14. Zweimassenschwungrad nach Anspruch 13, **dadurch gekennzeichnet, dass** die Dichtung (36) auf Zellulosebasis eine Latexbindung und/oder Latexbeschichtung aufweist.

15. Zweimassenschwungrad nach einem der Ansprüche 4 bis 14, **dadurch gekennzeichnet, dass** der Dichtungsring (36) axiale Ausschnitte für den Durchgang der die beiden Blechformteile (6, 14) verbindenden Befestigungsmittel (37) aufweist.

## Claims

1. Dual-mass flywheel (2) composed of a primary mass (3), which is connectable to the drive output shaft of an engine, and a secondary mass (4), which is connectable to the input shaft of a transmission, which primary mass and secondary mass are positioned concentrically and axially relative to one another by means of at least one bearing arrangement (5) and are rotatable relative to one another at least to a limited extent counter to the action of a damping device with energy stores (30), wherein the energy stores (30) are accommodated in a ring-shaped, annular chamber '(32) which is formed by the components (6, 14) of the primary mass (3) and which contains a viscous medium, wherein the components (6, 14) which form the chamber (32) and the secondary mass (4) bear load exertion regions (29, 34, 35) for the energy stores (30), wherein the annular chamber (32) is delimited at least by two components (6, 14) which, radially outside the energy stores (30), have mutually opposite areal, ring-shaped regions (18, 19) between which an areal, ring-shaped seal (36) is clamped, wherein one of the components (14) has a material thickness which is 20 to 50% of the material thickness of the other component (6), which is connectable to the drive output shaft of an engine, and wherein the component (14) with the smaller material thickness forms a potshaped region (15) which merges into the ring-shaped region (18) of said component.

2. Dual-mass flywheel according to Claim 1, **characterized in that** the components (6, 14) are formed by sheet-metal moulded parts composed of steel.

3. Dual-mass flywheel according to Claim 1 or 2, **characterized in that** the ring-shaped seal (36) has a ratio of 10 to 100 between the ring width of the material that forms it and the thickness.

4. Dual-mass flywheel according to one of Claims 1 to 3, **characterized in that** the ring-shaped seal (36) is formed by a separate sealing ring.

5. Dual-mass flywheel according to one of Claims 1 to 3, **characterized in that** the ring-shaped seal (36) is formed by an applied sealing compound.

6. Dual-mass flywheel according to Claims 1 to 5, **characterized in that** the connection between the components (6, 14) which have the ring-shaped regions (18, 19) is realized in the range of extent of the ring-shaped seal (36).

7. Dual-mass flywheel according to one of Claims 1 to 6, **characterized in that** the connection between the components (6, 14) which have the ring-shaped surfaces (18, 19) lies in the radial range of extent of a seal ring (36) that is held between said components.

8. Dual-mass flywheel according to one of Claims 1 to 6, **characterized in that** the ring-shaped regions (18, 19) are connected to one another by rivet connections (37).

9. Dual-mass flywheel according to Claim 8, **characterized in that**, to form the rivet connections (37), at least one of the sheet-metal moulded parts (6, 14) has integrally formed rivet studs which extend axially through recesses of the other sheet-metal moulded part in the range of extent of the ring-shaped seal (36).

10. Dual-mass flywheel according to Claim 8 or 9, **characterized in that** rivet connections (37) are arranged at different radii.

11. Dual-mass flywheel according to one of Claims 8 to 10, **characterized in that** the rivet connections (37) are arranged in zigzag fashion in the circumferential direction.

12. Dual-mass flywheel according to one of Claims 1 to 11, **characterized in that** the material that forms the ring-shaped seal (36) has elastic characteristics at least in an axial direction, and is installed in an elastically braced state between the ring-shaped regions (18, 19) of the two sheet-metal moulded parts (6, 14).

13. Dual-mass flywheel according to one of Claims 1 to 12, **characterized in that** the ring-shaped seal (36) is formed by a seal ring produced from a cellulose-based material.

14. Dual-mass flywheel according to Claim 13, **characterized in that** the seal (36) composed of a cellulose-based material has a latex bond and/or latex coating.

15. Dual-mass flywheel according to one of Claims 4 to 14, **characterized in that** the seal ring (36) has axial cutouts for the leadthrough of the fastening means (37) that connect the two sheet-metal moulded parts (6, 14).

## Revendications

1. Volant à deux masses (2) constitué d'une masse primaire (3) pouvant être reliée à l'arbre de sortie d'un moteur et d'une masse secondaire (4) pouvant être reliée à l'arbre d'entrée d'une transmission, lesquelles sont positionnées concentriquement et axialement l'une par rapport à l'autre au moyen d'au moins un palier (5) et peuvent tourner de manière au moins limitée l'une par rapport à l'autre à l'encontre de l'action d'un dispositif d'amortissement comprenant des accumulateurs d'énergie (30), les accumulateurs d'énergie (30) étant reçus dans une chambre de type anneau (32) annulaire formée par les composants (6, 14) de la masse primaire (3) et contenant un milieu visqueux, les composants (6, 14) formant la chambre (32) et la masse secondaire (4) portant des régions de sollicitation (29, 34, 35) pour les accumulateurs d'énergie (30), la chambre de type anneau (32) étant limitée au moins par deux composants (6, 14) qui présentent des régions annulaires planes (18, 19) en regard radialement à l'extérieur des accumulateurs d'énergie (30), entre lesquelles régions annulaires est serré un joint d'étanchéité annulaire plan (36), l'un des composants (14) présentant une épaisseur de matériau qui constitue de 20 à 50 % de l'épaisseur de matériau de l'autre composant (6) pouvant être relié à l'arbre de sortie d'un moteur, et le composant (14) présentant la plus faible épaisseur de matériau formant une région en forme de pot (15) qui se prolonge par sa région annulaire (18).

2. Volant à deux masses selon la revendication 1, **caractérisé en ce que** les composants (6, 14) sont formés par des pièces façonnées en tôle d'acier.

3. Volant à deux masses selon la revendication 1 ou 2, **caractérisé en ce que** le joint d'étanchéité annulaire (36) présente un rapport entre la largeur annulaire du matériau le formant et l'épaisseur de 10 à 100.

4. Volant à deux masses selon l'une quelconque des revendications 1 à 3, **caractérisé en ce que** le joint d'étanchéité annulaire (36) est formé par une bague d'étanchéité séparée.

5. Volant à deux masses selon l'une quelconque des revendications 1 à 3, **caractérisé en ce que** le joint d'étanchéité annulaire (36) est formé par une masse d'étanchéité appliquée.

6. Volant à deux masses selon les revendications 1 à 5, **caractérisé en ce que** la liaison entre les composants (6, 14) comprenant les régions annulaires (18, 19) s'effectue dans la région d'étendue du joint d'étanchéité annulaire (36).

7. Volant à deux masses selon l'une quelconque des revendications 1 à 6, **caractérisé en ce que** la liaison entre les composants (6, 14) comprenant les surfaces annulaires (18, 19) se situe dans la région d'étendue radiale d'une bague d'étanchéité (36) reçue entre ceux-ci.

8. Volant à deux masses selon l'une quelconque des revendications 1 à 6, **caractérisé en ce que** les régions annulaires (18, 19) sont reliées l'une à l'autre au moyen de liaisons par rivetage (37).

9. Volant à deux masses selon la revendication 8, **caractérisé en ce que**, pour la formation des liaisons par rivetage (37), au moins l'une des pièces façonnées en tôle (6, 14) comprend des boutons de rivet formés d'un seul tenant qui s'étendent axialement à travers des évidements de l'autre pièce façonnée en tôle dans la région d'étendue du joint d'étanchéité annulaire (36).

10. Volant à deux masses selon la revendication 8 ou 9, **caractérisé en ce que** des liaisons par rivetage (37) sont disposées sur des rayons différents.

11. Volant à deux masses selon l'une quelconque des revendications 8 à 10, **caractérisé en ce que** les liaisons par rivetage (37) sont disposées en zigzag dans la direction périphérique.

12. Volant à deux masses selon l'une quelconque des revendications 1 à 11, **caractérisé en ce que** le matériau formant le joint d'étanchéité annulaire (36) présente des propriétés élastiques au moins dans la direction axiale et est installé, dans un état tendu élastiquement, entre les régions annulaires (18, 19) des deux pièces façonnées en tôle (6, 14).

13. Volant à deux masses selon l'une quelconque des revendications 1 à 12, **caractérisé en ce que** le joint d'étanchéité annulaire (36) est formé par une bague d'étanchéité fabriquée à base de cellulose.

14. Volant à deux masses selon la revendication 13, **caractérisé en ce que** le joint d'étanchéité (36) à base de cellulose comprend une liaison de latex et/ou un revêtement en latex.

15. Volant à deux masses selon l'une quelconque des revendications 4 à 14, **caractérisé en ce que** la bague d'étanchéité (36) comprend des découpes axiales pour le passage des moyens de fixation (37) reliant les deux pièces façonnées en tôle (6, 14).
